# EUROPÄISCHE PATENTSCHRIFT

(11) **EP 4 417 342 B1**
(45) Veröffentlichungstag und Bekanntmachung des Hinweises auf die Patenterteilung: **25.11.2026**
(21) Anmeldenummer: 24157636.2
(22) Anmeldetag: 14.02.2024
(51) Int. Cl.: B22D 17/00, B22D 17/32, B22D 18/00, B22D 18/08, B22D 45/00, B22D 46/00

(54) **VERFAHREN ZUR PROZESSAUSLEGUNG FÜR EINE GIESSVORRICHTUNG UND VERFAHREN ZUR STEUERUNG EINER GIESSVORRICHTUNG**
METHOD FOR PROCESS DESIGN A CASTING DEVICE AND METHOD FOR CONTROLLING A CASTING DEVICE
PROCÉDÉ DE DESIGN DE PROCESSUS POUR UN DISPOSITIF DE COULÉE ET PROCÉDÉ DE COMMANDE D'UN DISPOSITIF DE COULÉE

(30) Priorität: 14.02.2023 DE 102023103582
(43) Veröffentlichungstag der Anmeldung: 21.08.2024
(73) Patentinhaber: Martinrea Honsel Germany GmbH, 59872 Meschede (DE)
(72) Erfinder: Schulte, Boris, 59872 Meschede (DE)
(74) Vertreter: Janke Scholl Patentanwälte PartG mbB

(56) Entgegenhaltungen:
- DE-A1- 102009 059 071
- KRIMPENIS A ET AL: "Simulation-based selection of optimum pressure die-casting process parameters using neural nets and genetic algorithms", THE INTERNATIONAL JOURNAL OF ADVANCED MANUFACTURING TECHNOLOGY, SPRINGER, BERLIN, DE, vol. 27, no. 5-6, 1 January 2006 (2006-01-01), pages 509 - 517, XP019380514, ISSN: 1433-3015, DOI: 10.1007/S00170-004-2218-0
- VOSNIAKOS G C ET AL: "The scope of artificial neural network metamodels for precision casting process planning", ROBOTICS AND COMPUTER INTEGRATED MANUFACTURING, ELSEVIER SCIENCE PUBLISHERS BV., BARKING, GB, vol. 25, no. 6, 1 December 2009 (2009-12-01), pages 909 - 916, XP026519335, ISSN: 0736-5845, [retrieved on 20090521], DOI: 10.1016/J.RCIM.2009.04.018
- MARÍA G VILLARREAL ET AL: "Simulation optimization applied to injection molding", WINTER SIMULATION, WINTER SIMULATION CONFERENCE, 31 December 2008 (2008-12-31), pages 1995 - 2003, XP058032491, ISBN: 978-1-4244-2708-6, DOI: 10.1109/WSC.2008.4736294

## Beschreibung

Die vorliegende Erfindung betrifft Verfahren zur Prozessauslegung für eine Gießvorrichtung sowie ein Verfahren zur Steuerung einer Gießvorrichtung.

Die Qualität eines Gussbauteils bzw. Gießbauteils hängt von einer Vielzahl von Parametern ab, wie z.B. der Schmelzetemperatur, der Formtemperatur, der Druckkurve, der Druckhaltezeit, der Kühlungen und der Aushärtezeit, um nur einige zu nennen. Es besteht daher eine besondere Herausforderung darin, für ein bestimmtes Bauteil mit seiner individuellen Bauteilgeometrie diejenigen Paramater zur Steuerung der Gießvorrichtung zu finden, welche die Ursache für Defekte bzw. Fehlstellen an dem Bauteil sind.

Beim erstmaligen Herstellen eines neuen Bauteils müssen daher Prozessparameter ermittelt werden, die eine zuverlässige Serienfertigung des betreffenden Bauteils ermöglichen. Hierbei wird in der betrieblichen Praxis häufig auf Erfahrungswerte der Mitarbeiter zurückgegriffen und nach dem "Trial-and-Error" Prinzip Variationen der Parameter durchgeführt, um zu einem stabilen Prozess zu gelangen. Dieses Vorgehen kann schnell zum Erfolg führen oder sehr langwierig sein, da es sehr stark von den individuellen Fähigkeiten der Mitarbeiter und eben auch von Glückstreffern bzw. vom Zufall abhängt. Der erstmalige Start einer Serienfertigung eines neuen Bauteils ist daher zeit- und kostenintensiv und schwer planbar.

Um die Anzahl von fehlerhaft hergestellten Gussbauteilen zu reduzieren und um das Auffinden von sinnvollen Prozessparametern zu vereinfachen, werden rechnergestützte Simulationen durchgeführt, die den Gussprozess für ein individuelles Bauteil virtuell nachbilden. Hierbei handelt es sich üblicherweise um Gießprozesssimulationen, die zum Ziel haben, die physikalischen Prozesse des realen Gießprozesses möglichst genau rechnergestützt abzubilden.

Dabei werden beispielsweise einhundert verschiedene Parametersätze analysiert und ausgewertet. Ein Parametersatz bildet dabei einen Versuchspunkt aus, wobei für jeden Versuchspunkt beispielsweise die aufeinanderfolgende Herstellung von fünf Bauteilen simuliert wird. Für jeden Versuchspunkt werden virtuell daher fünf Schuss gefahren. Ein "Schuss" bezeichnet dabei in bekannter Weise die Herstellung eines Gussbauteils durch Einbringen von Schmelze in eine Gießform.

Die Art des Versuchsplans, die Anzahl der Versuchspunkte und die Anzahl der zu simulierenden Schüsse je Bauteil werden dabei durch einen Benutzer vorgegeben. Eine solche Versuchsreihe, die insgesamt die Simulation von fünfhundert Gussbauteilen umfasst, erfordert enorme Rechenkapazitäten und dauert selbst mit sehr leistungsfähigen Rechnern mehrere Tage oder Wochen. Auch unter Zuhilfenahme moderner Simulationssoftware ist das erstmalige Anfahren einer Serienproduktion daher weiterhin zeit- und kostenintensiv.

Die virtuell hergestellten Bauteile können bezüglich ihrer Qualität ebenfalls rechnergestützt analysiert werden. Hierbei wird üblicherweise für jeden Versuchspunkt das letzte simulierte Bauteil analysiert, da für dieses Bauteil das Erreichen eines stationären Zustands für die Temperatur der virtuellen Gießform angenommen wird. Für das zuvor genannte Vorgehen würde somit das jeweils fünfte Bauteil eines jeweiligen Versuchspunkts analysiert werden. Anhand der Qualität der virtuellen Bauteile werden anschließend diejenigen Parameter ermittelt, die für erste praktische Versuche sinnvoll sein könnten.

Die voranstehend beschriebene Vorgehensweise hat den Nachteil, dass die Annahme, dass für den fünften Schuss eines jeden Versuchspunkts der stationäre Zustand der Temperatur der Gießform erreicht wird, nicht immer zutreffen muss. Denn die Anzahl der Wiederholungen für jeden Versuchspunkt wird durch den Benutzer festgelegt - und zwar wiederum auf Grundlage von Erfahrungswerten. So kann z.B. der Fall auftreten, dass beispielsweise für einige der Versuchspunkte der stationäre Zustand bereits nach drei Schüssen erreicht ist, während für andere Versuchspunkte sieben Schüsse bis zum Erreichen des stationären Zustands erforderlich sind.

Die Ergebnisse der zuvor beschriebenen Versuchsreihe können daher dadurch beeinträchtigt sein, dass bestimmte Parametersätze einzelner Versuchspunkte als nicht geeignet verworfen werden, da die Auswertung eines Bauteils vor dem Erreichen des stationären Zustands erfolgt ist. Es ist jedoch möglich, dass gerade dieser Versuchspunkt mit dem Erreichen des stationären Zustands hervorragende Ergebnisse liefert.

Umgekehrt kann der Fall auftreten, dass Versuchspunkte als geeignet eingestuft werden, obwohl die Auswertung eines Bauteils dieses Versuchspunkts vor dem Erreichen des stationären Zustands erfolgt ist. Es ist daher möglich, dass dieser Versuchspunkt mit dem Erreichen des stationären Zustands unbrauchbare Ergebnisse liefert.

Diese Unsicherheit hat zur Folge, dass in der betrieblichen Praxis die Anzahl der Schüsse je Versuchspunkt durch einen Bediener von vorneherein erhöht bzw. zur sicheren Seite hin abgeschätzt wird, um in jedem Fall für jeden der Versuchspunkte den stationären Zustand zu erreichen. So wird für das zuvor beschriebene Bauteil die Anzahl der Schüsse je Bauteil z.B. von fünf auf sieben oder zehn erhöht, wobei die Simulationsreihe statt fünfhundert nunmehr siebenhundert oder eintausend Einzelsimulationen für die Gussherstellung eines jeweiligen Bauteils umfasst. Die Rechenzeit erhöht sich dementsprechend. Dabei müssen in Abhängigkeit des gewählten Versuchsplans die Versuchspunkte mit den veränderten Randbedingungen, respektive der angenommenen Anzahl an Zyklen, gegebenenfalls noch einmal neu gerechnet werden.

Auch dieses Vorgehen der Erhöhung der Schüsse je Versuchspunkt schließt jedoch einerseits nicht aus, dass für einige wenige Versuchspunkte weiterhin der stationäre Zustand nicht erreicht wird, während andererseits für den Großteil der Versuchspunkte zu viele Schüsse simuliert werden, da der stationäre Zustand bereits früher erreicht ist.

Weiter hat die alleinige Auswertung des jeweils letzten simulierten Schusses eines jeweiligen Versuchspunkts den Nachteil, dass mittels der Simulation keine Qualitätsaussagen zu den Bauteilen während des Aufheizens der Form bis zum stationären Zustand ermittelt werden. Derartige Daten könnten jedoch für das Anfahren eines Prozesses bzw. den Kaltstart nützlich sein, um schneller Gutteile zu produzieren.

Für bestimmte Bauteilgeometrien kann es zudem vorkommen, dass die festgelegte Anzahl der benutzerdefinierten Versuchspunkte insgesamt nicht ausreicht, um geeignete Prozessparameter zu ermitteln - oder aber, dass die Anzahl der Versuchspunkte viel zu hoch ist.

Das voranstehend beschriebene Vorgehen des vordefinierten Festlegens und Abarbeitens des gesamten Versuchsplans bzw. der gesamten Versuchsreihe hat weiter den Nachteil, dass die Software nicht auf die Ergebnisse von vorangegangenen Simulationen anderer Bauteile zurückgreift. Soweit in einem vorangegangenen Versuch z.B. ermittelt worden ist, dass eine bestimmte Schmelzetemperatur oder Formtemperatur für die Herstellung eines betreffenden Bauteils zu niedrig ist, werden nachfolgend dennoch weitere Versuchspunkte mit noch niedrigeren Schmelzetemperaturen oder Formtemperaturen gerechnet, um den Versuchsplan vollständig abzuarbeiten. Jeder Versuchspunkt und jedes Bauteil des Versuchsplans wird daher vollständig neu gerechnet bzw. simuliert - unter Beanspruchung der zuvor bereits genannten hohen Rechenleistung und Rechenzeit und unabhängig davon, ob der Versuchspunkt praxisrelevant ist oder nicht.

Die Auswahl der Prozessparameter anhand der voranstehend beschriebenen Simulationsreihen hat weiter den Nachteil, dass Aussagen zu Robustheit bzw. Stabilität eines jeweiligen Versuchspunkts nur mittels enormem Rechenaufwand und/oder Versuchsaufwand getroffen werden können. Beispielsweise kann es vorkommen, dass ein Versuchspunkt, der in der Simulation und in der Praxis zunächst gute Bauteilqualitäten liefert, sehr sensitiv für jedwede kleinere Parameterschwankung ist. In der Serienfertigung kann es daher zu erheblichen Qualitätsproblemen kommen, sofern die vorgegebenen Parameter nicht jederzeit exakt eingehalten werden.

KRIMPENIS A ET AL: "Simulation-based selection of optimum pressure die-casting process parameters using neural nets and genetic algorithms",THE INTERNATIONAL JOURNAL OF ADVANCED MANUFACTURING TECHNOLOGY, SPRINGER, BERLIN, DE, Bd. 27, Nr. 5-6, 1. Januar 2006 (2006-01-01), Seiten 509-517, XP019380514,ISSN: 1433-3015, DOI: 10.1007/S00170-004-2218-0 offenbart ein beispielhaftes Verfahren zur Prozessauslegung für eine Gießvorrichtung.

Vor diesem Hintergrund liegt der vorliegenden Erfindung die technische Problemstellung zugrunde, ein verbessertes Verfahren zur Prozessauslegung für eine Gießvorrichtung und ein verbessertes Verfahren zur Steuerung einer Gießvorrichtung anzugeben, welche insbesondere das effizientere Auffinden und Regeln stabiler Prozessparameter für ein Gussbauteil ermöglichen.

Die voranstehend beschriebene, technische Problemstellung wird durch die Merkmale der unabhängigen Ansprüche gelöst. Weitere Ausgestaltungen der Erfindung ergeben sich aus den abhängigen Ansprüchen und der nachstehenden Beschreibung.

Der vorliegenden Erfindung liegt die Idee zugrunde, die bekannte Gießprozesssimulation und/oder praktischen Experimente um Modelle zur effizienteren Versuchsplanung und Prozessanalyse zu ergänzen, um auf diese Weise das Auffinden robuster Prozessparameter zu beschleunigen und eine stabile Regelung eines Gießprozesses zu ermöglichen.

Erfindungsgemäß wird ein Verfahren zur Prozessauslegung für eine Gießvorrichtung angegeben, mit den Verfahrensschritten: Durchführung einer Versuchspunktberechnung, wobei einem jeweiligen Versuchspunkt Prozessparameter eines Gießprozesses für ein Gießbauteil zugeordnet sind, wobei eine Anzahl von Prozessparametern einen n-dimensionalen Versuchsraum definiert und wobei die Versuchspunkte sequenziell den Versuchsraum füllend innerhalb des Versuchsraums berechnet und an eine Gießprozesssimulation übergeben werden; Durchführung der Gießprozesssimulation, wobei sequenziell für die von der Versuchspunktberechnung übergebenen Versuchspunkte die Herstellung des Gießbauteils anhand der dem jeweiligen Versuchspunkt zugeordneten Prozessparameter simuliert wird, wobei für jeden Versuchspunkt in einer virtuellen Gießform das sequenzielle Herstellen von zwei oder mehr Gießbauteilen simuliert wird, bis die Temperatur der virtuellen Gießform einen stationären Zustand erreicht hat, wobei für jedes Gießbauteil eines Versuchspunkts eine Auswertung eines Ausgangsparameters oder mehrerer Ausgangsparameter erfolgt; Durchführung einer Optimierung, wobei anhand der Prozessparameter und der zugeordneten Ausgangsparameter mindestens ein Metamodell der Gießprozesssimulation für zumindest einen Teil des n-dimensionalen Versuchsraums erstellt wird, wobei für einen der Ausgangsparameter oder für mehrere der Ausgangsparameter ein robustes, stationäres Optimum mit seinen zugeordneten Prozessparametern ermittelt wird; Durchführung eines Gießprozesses wobei mindestens ein Gießbauteil mittels einer Gießvorrichtung hergestellt wird, wobei die dem robusten, stationären Optimum zugeordneten Prozessparameter als Prozessparameter der Gießvorrichtung verwendet werden und wobei eine Auswertung eines Ausgangsparameters oder mehrerer Ausgangsparameter für das Gießbauteil erfolgt.

Die erfindungsgemäße Vorgehensweise hat zunächst den Vorteil, dass im Vergleich zur einleitend beschriebenen Simulationsstrategie weit weniger Gießprozesssimulationen erforderlich sind, um robuste Prozessparameter zu finden. So wird zunächst die Anzahl der für jeden Versuchspunkt erforderlichen Schüsse, d. h. die Anzahl der für jeden Versuchspunkt aufeinanderfolgend zu simulierenden Bauteilherstellungen, dadurch reduziert, dass ein Abbruchkriterium in Form des Erreichens der stationären Temperatur für die virtuelle Gießform eingeführt wird. Auf diese Weise kann verhindert werden, dass für einen betreffenden Versuchspunkt weitere Schüsse simuliert werden, es jedoch zu keinerlei Veränderungen der Ausgangsparameter kommt, da der stationäre Zustand bereits erreicht worden ist. Auf diese Weise können Energie, Rechenzeit und Speicherkapazitäten eingespart werden.

Ein wesentlicher Unterschied zur einleitend beschriebenen Vorgehensweise besteht darin, dass für jedes Gießbauteil eines Versuchspunkts eine Auswertung eines Ausgangsparameters oder mehrerer Ausgangsparameter erfolgt. Mit anderen Worten wird erfindungsgemäß jeder Schuss eines Versuchspunkts ausgewertet, wobei zudem mit dem Erreichen des stationären Zustands ein Abbruch der Durchläufe für den jeweiligen Versuchspunkt erfolgt. Auf diese Weise werden einerseits relevante Daten für das Verhalten der Gießvorrichtung beispielsweise während eines Kaltstarts oder vor dem Erreichen eines stationären Zustands gesammelt und andererseits zügiger die nächsten Versuchspunkte simuliert.

Durch das Abbruchkriterium kann daher im Vergleich zu einem fest vordefinierten Versuchsplan mit vorgegebener Schusszahl je Versuchspunkt vermieden werden, dass für einen Versuchspunkt zu wenig oder zu viele Wiederholungen simuliert werden. Weiter kann vermieden werden, dass Simulationsergebnisse als gut eingestuft werden, für die ein stationärer Zustand nicht erreicht worden ist oder dass Simulationsergebnisse verworfen werden, obwohl kein stationärer Zustand erreicht worden ist.

Die erfindungsgemäße Vorgehensweise hat weiter den Vorteil, dass durch die Bereitstellung des mindestens einen Metamodells Interpolationseffekte genutzt und schneller optimale Prozessparameter gefunden werden können.

Weiter kann mittels des mindestens einen Metamodells eine schnelle Ursachenanalyse durchgeführt werden, um den Zusammenhang zwischen einem Prozessparameter und einem Bauteildefekt zu bewerten.

Wenn vorliegend von einem n-dimensionalen Versuchsraum gesprochen wird, so werden die "n" Dimensionen dieses Versuchsraums insbesondere dadurch definiert, dass die Anzahl von Prozessparametern einer natürlichen Zahl n ≥ 2 entspricht.

Die Begriffe "Gießbauteil" und "Gussbauteil" werden im vorliegenden Text synonym verwendet. Die Begriffe "Gießprozess" und "Gussprozess" werden im vorliegenden Text synonym verwendet. Es können zwei oder mehr Metamodelle für die Optimierung verwendet werden. Die Optimierung kann insbesondere eine Mehrzieloptimierung sein, wobei die optimalen Prozessparameter für zwei oder mehr zu berücksichtigende Ausgangsparameter bestimmt werden.

Insgesamt können durch die erfindungsgemäße Vorgehensweise die erforderliche Rechenzeit und auch die zur Simulation erforderliche elektrische Energie sowie die Kosten maßgeblich reduziert werden, um auf diese Weise schneller zu sinnvollen Prozessparametern zu gelangen, die anschließend in realen Versuchen verifiziert werden können.

### Durchführung der Versuchspunktberechnung

Die Versuchspunktberechnung dient insbesondere dazu, den vorgegebenen Versuchsraum schnellstmöglich raumfüllend abzudecken und zudem schnellstmöglich zu einem validierten Metamodell oder zu mehreren validierten Metamodellen zu gelangen. Es werden daher nur so viele Gießprozesssimulationen durchgeführt, die zum Bereitstellen eines Metamodells oder mehrerer Metamodelle erforderlich sind, wobei die Optimierung, insbesondere eine Mehrzieloptimierung, auf Grundlage des Metamodells oder der Metamodelle durchgeführt werden kann.

Weiter dient die Versuchspunktberechnung insbesondere dazu, nicht sinnvolle Versuchspunkte auszuschließen und eine Gießprozesssimulation für nicht praxistaugliche bzw. nicht fahrbare Versuchspunkte zu vermeiden. Im Rahmen der Versuchspunktberechnung werden daher Eingangs- und Ausgangsbeschränkungen, welche gemeinsam die tatsächlichen Grenzen des betrachteten Versuchsraums festlegen, berücksichtigt.

Die Versuchspunktberechnung dient weiter insbesondere nicht lediglich dazu, den vorgegebenen Versuchsraum erstmalig raumfüllend abzudecken, sondern kann des Weiteren auch zur Bestimmung von Versuchspunkten während der Überprüfung einer Robustheit eines stationären Optimums verwendet werden.

Weiter kann die Versuchspunktberechnung zur Bestimmung von Versuchspunkten während der Durchführung der praktischen Versuche des Gießprozesses verwendet werden. Auch während der Durchführung der praktischen Versuche kann die Versuchspunktberechnung zur Überprüfung der Einhaltung von Eingangsbeschränkungen und Ausgangsbeschränkungen verwendet werden.

Die Versuchspunktberechnung kann ein eigenständiges Softwaremodul sein, das eine Schnittstelle zu der Gießprozesssimulation bzw. zu einer speicherprogrammierbaren Steuerung der Gießmaschine aufweist. Alternativ kann die Versuchspunktberechnung integraler Bestandteil der Gießprozesssimulation sein.

Es kann vorgesehen sein, dass der Versuchsraum durch mindestens eine vorbekannte Eingangsbeschränkung oder durch mehrere vorbekannte Eingangsbeschränkungen begrenzt ist, insbesondere eine oder mehrere physikalische vorbekannte Eingangsbeschränkungen und/oder eine oder mehrere maschinentechnische vorbekannte Eingangsbeschränkungen und/oder eine oder mehrere bauteilspezifische vorbekannte Eingangsbeschränkungen.

Eingangsbeschränkungen sind insbesondere alle bekannten Grenzen, welche den theoretischen Versuchsraum vorab festlegen, also die minimalen und maximalen Grenzen des Versuchsraums. Für das Beispiel der Schmelzetemperatur gilt hierbei: Die minimale Grenze ist durch die Solidustemperatur der Legierung festgelegt. Die maximale Grenze ist durch die maximale Heizleistung in der bestehenden Maschinenkonfiguration festgelegt. Es ist daher nicht sinnvoll, Simulationen unterhalb der Solidustemperatur oder oberhalb der maximal erreichbaren Temperatur durchzuführen, da diese in der Praxis nicht nachgebildet werden können.

Der Gießprozesssimulation sind physikalische, maschinentechnische oder bauteilspezifische Grenzen des zu simulierenden Gießprozesses nicht bekannt. Beispielsweise können bestimmte Bauteile einer Gießvorrichtung Grenzen bezüglich der Druckbeständigkeit und/oder Temperaturbeständigkeit haben, deren Nichtbeachtung zu einer Beschädigung der betreffenden Bauteile führen könnte. Es ist daher nicht sinnvoll, Prozessparameter in einem Bereich zu wählen, der die Grenzen der Belastbarkeit für die betreffenden Bauteile überschreiten würde. Hierbei handelt es sich daher um ein Beispiel für maschinentechnische Grenzen bzw. Eingangsbeschränkungen. Ein Beispiel für eine weitere maschinentechnische Grenze ist beispielsweise eine mögliche Geschwindigkeit für ein Erwärmen der Schmelze. So ist ein maximal zu erreichender Wärmeeintrag pro Zeiteinheit durch die Leistungsfähigkeit einer betreffenden Heizeinrichtung einer Gießvorrichtung begrenzt. Es ist daher nicht sinnvoll Prozessparameter zu simulieren, die von einer schnelleren Erwärmung der Schmelze ausgehen.

Ein Beispiel für eine physikalische Grenze ist die Solidustemperatur der betreffenden Legierung, die zur Herstellung des betreffen des Gießbauteils mittels der Gießvorrichtung verwendet wird. So ist es nicht sinnvoll, Prozessparameter zu simulieren, die ein Entnehmen eines betreffenden Gießbauteils vor einem vollständigen Erstarren des betreffenden Bauteils vorsehen. Es ist ersichtlich, dass es gleichermaßen nicht sinnvoll ist, Schmelzetemperaturen zu simulieren, die unterhalb der Solidustemperatur liegen.

Ein Beispiel, welches gleichermaßen als maschinentechnische oder bauteilspezifische Grenze angesehen werden kann, ist die Menge der Schmelze, die in eine Gießform eingebracht wird bzw. das Volumen des Bauteils. So ist es nicht sinnvoll, Prozessparameter zu simulieren, für die eine Gießform nicht vollständig gefüllt werden kann, da auf diese Weise eine Fertigung des betreffenden Bauteils schlicht nicht möglich ist.

Maschinentechnische Eingangsbeschränkungen sind z.B. die maximalen Durchflussraten der Kühlungen, die maximalen Heizleistungen, die maximale Druckanstiegsrampe oder der Umstand, dass der Kühlungsbeginn vor dem Kühlungsende liegen muss.

Die Eingangsbeschränkungen begrenzen den Versuchsraum daher bereits vor der ersten Simulation eines ersten Versuchspunkts auf denjenigen Teilbereich des Versuchsraums, der unter Berücksichtigung physikalischer und/oder maschinentechnischer und/oder bauteilspezifischer Randbedingungen in der Praxis durchführbar ist, sodass Versuchspunkte ausgeschlossen werden, die in der Praxis nicht darstellbar sind oder zu einer Beschädigung der Gießvorrichtung führen könnten.

Es kann vorgesehen sein, dass der Versuchsraum durch eine Ausgangsbeschränkung oder durch mehrere Ausgangsbeschränkungen begrenzt ist, insbesondere eine oder mehrere physikalische Ausgangsbeschränkungen und/oder eine oder mehrere maschinentechnische Ausgangsbeschränkungen und/oder eine oder mehrere bauteilspezifische Ausgangsbeschränkungen, wobei die Ausgangsbeschränkungen anhand der Ausgangsparameter der Gießprozesssimulation und/oder des Gießprozesses ermittelt werden.

Ausgangsbeschränkungen sind nicht vorbekannt, sondern ergeben sich erst nach der Simulation mehrerer Versuchspunkte. Die Ausgangsbeschränkungen begrenzen ebenfalls den Versuchsraum auf diejenigen Versuchspunkte, die praxisrelevant sind. Die Grenzen des Versuchsraums bezüglich der Ausgangsbeschränkungen sind dabei a priori insbesondere unbekannt.

Ein Beispiel für eine Ausgangsbeschränkung ist beispielsweise eine Düsenlänge eines gegossenen Bauteils. Dabei handelt es sich um einen Abschnitt des Bauteils, der im Bereich einer Düse zur Einbringung von Schmelze in die Gießform erstarrt. Wird die Düsenlänge für ein betreffendes Bauteil zu groß, kann es zu einer Beschädigung der Düse der Gießvorrichtung kommen, sodass diese irreparabel ist oder durch aufwändige Montagearbeiten von erstarrtem Material befreit werden muss. Weiter kann es hierbei zur Beschädigung von Handhabungsgeräten kommen und es kann ggf. ein Produktionsstopp verursacht werden.

Ein weiteres Beispiel für eine Ausgangsbeschränkung ist eine Auswurftemperatur bzw. eine Solidustemperatur eines betreffenden Bauteils. Ist diese zu hoch, kann die Formhaltigkeit oder die Maßhaltigkeit des betreffenden Bauteils beeinträchtigt werden, obwohl die Schmelze bereits erstarrt ist. Weiter kann eine zu hohe Auswurftemperatur zur Beschädigung von Handhabungsgeräten führen, die zum Abtransport des betreffenden Gießbauteils aus der Gießform vorgesehen sind. Sowohl bei der Düsenlänge als auch bei der Auswurftemperatur handelt es sich daher um Parameter, die erst bestimmt werden können, nachdem das betreffende Bauteil simuliert worden ist bzw. gefertigt worden ist.

Ausgangsbeschränkungen können weiter gegeben sein, soforn die betreffenden Prozessparameter im praktischen Betrieb zu einem Maschinenstopp führen würden.

Es kann vorgesehen sein, dass für mindestens eine Ausgangbeschränkung ein extrapolierbares Modell berechnet wird, wobei für jeden Versuchspunkt vor der Übergabe desselben an die Gießprozesssimulation eine Einhaltung der Ausgangbeschränkung anhand einer Extrapolation auf Grundlage des extrapolierbaren Modells überprüft wird, wobei für den Fall der Einhaltung der Ausgangbeschränkung der Versuchspunkt an die Gießprozesssimulation übergeben wird, wobei für den Fall der Nichteinhaltung der Ausgangbeschränkung der Versuchspunkt verworfen und ein neuer Versuchspunkt innerhalb des Versuchsraums berechnet und wobei dieser neue Versuchspunkt wiederum auf die Einhaltung der Ausgangbeschränkung überprüft wird.

Es kann vorgesehen sein, dass der Versuchspunkt verworfen und ein neuer Versuchspunkt anhand des extrapolierbaren Modells auf einer Grenze der Ausgangbeschränkung bestimmt wird.

Alternativ kann vorgesehen sein, dass der Versuchspunkt mittels des extrapolierbaren Modells verschoben wird, wobei ein Sicherheitsabstand zu der Grenze der Ausgangbeschränkung eingehalten wird.

Nachdem erste Versuchspunkte innerhalb des Versuchsraums berechnet und ausgewertet worden sind, kann mithilfe des extrapolierbaren Modells für nachfolgende Versuchspunkte abgeschätzt bzw. vorhergesagt werden, ob diese eine zugeordnete Ausgangsbeschränkung einhalten oder die betreffende Ausgangsbeschränkung wahrscheinlich verletzen werden.

Ist zum Beispiel eine starke Korrelation zwischen der Schmelzetemperatur und der Düsenlänge zu erkennen, und wird für eine bereits simulierte vergleichsweise niedrige Schmelzetemperatur eine kritische Düsenlänge bereits nahezu erreicht, so kann davon ausgegangen werden, dass für eine weitere starke Verringerung der Schmelzetemperatur die kritische Düsenlänge überschritten werden wird. Das extrapolierbare Modell bildet daher eine Möglichkeit, die Einhaltung der Ausgangsbeschränkungen bereits in der Versuchsplanung vor der Durchführung der Simulation des betreffenden Versuchspunkts zu berücksichtigen. So kann vermieden werden, dass wertvolle Rechenzeit für nicht praxistaugliche Versuchspunkte verschwendet wird.

Hierbei können mehrere separate extrapolierbare Modelle für kritische Ausgangsbeschränkungen berechnet werden. Um beim zuvor für eine Ausgangsbeschränkung genannten Beispiel zu bleiben, kann beispielsweise ein extrapolierbares Modell für den Zusammenhang zwischen der Auswurftemperatur und einer Kühldauer erstellt werden.

In ein solches extrapolierbares Modell können mehrere Prozessparameter als Eingangsgrößen einfließen. Beispielsweise können beim vorgenannten Beispiel die Kühldauer und eine Schmelzetemperatur als Eingangsgrößen dienen, mit der Auswurftemperatur als Ausgangsgröße.

Es versteht sich, dass in einem solchen extrapolierbaren Modell mehrere Prozessparameter als Eingangsgrößen und mehrere Ausgangsbeschränkungen als Ausgangsgrößen berücksichtigt werden können.

Insgesamt dient die Angabe eines extrapolierbaren Modells oder mehrerer extrapolierbare Modelle für eine Ausgangsbeschränkung oder für mehrere Ausgangsbeschränkungen dazu, Ergebnisse der Gießprozesssimulation schnellstmöglich zur effizienten Versuchspunktberechnung zu verwenden, um die Simulation nicht praxisrelevanter Versuchspunkte zu vermeiden.

Die Ausgangsbeschränkungen ermöglichen in Zusammenhang mit den extrapolierbaren Modellen zudem, die Grenzen des praxisrelevanten Versuchsraums abzuschätzen.

Das extrapolierbare Modell kann eine lineare Regression sein. Das extrapolierbare Modell kann ein KI-Modell sein, wie ein neuronales Netz oder dergleichen. Sofern eine vorgegebene Modellgüte erreicht ist, kann in beiden Fällen zügig eine Vorhersage über die Einhaltung oder Nichteinhaltung der zugeordneten Ausgangsbeschränkung bzw. der zugeordneten Ausgangsbeschränkungen getroffen werden.

Als Ausgangspunkt der Versuchspunktberechnung kann es sinnvoll sein, einen möglichst sicheren Versuchspunkt zu wählen, für den mit sehr hoher Wahrscheinlichkeit weder eine Eingangsbeschränkung noch eine Ausgangsbeschränkung verletzt werden wird.

Beispielsweise kann vorgesehen sein, dass als erster Versuchspunkt ein robuster Versuchspunkt eines ähnlichen Bauteils vorgegeben wird. Der Begriff "ähnlich" bedeutet in diesem Fall beispielsweise, dass das erstmals herzustellende Gießbauteil eine zu dem vorbekannten Bauteil vergleichbare Form, vergleichbare Dimensionen und/oder vergleichbare Wandstärken aufweist und insbesondere eine vergleichbare Legierung verwendet wird.

Alternativ kann als erster Versuchspunkt ein zentraler Versuchspunkt innerhalb des Versuchsraums ausgewählt werden, dessen Prozessparameter einen vorgegebenen Mindestabstand zu Parametergrenzen der Prozessparameter aufweist, insbesondere einen vorgegebenen Mindestabstand zu vorbekannten Eingangsbeschränkungen aufweist. Es soll demnach ein Versuchspunkt zum Start der Simulation gewählt werden, der möglichst weit von den Prozessgrenzen entfernt sein sollte. Soweit für Prozessparameter Wertebereiche angegeben werden, die den Versuchsraum aufspannen, könnte für eine Mehrzahl dieser Prozessparameter beispielsweise ein mittlerer Wert zwischen einem Minimum und einem Maximum des betreffenden Prozessparameters gewählt werden, da die Grenzen der Prozessparameter üblicherweise zu den zu erwartenden Grenzen des Prozesses hin abgeschätzt werden.

Es kann vorgesehen sein, dass ausgehend von dem ersten Versuchspunkt zunächst Versuchspunkte innerhalb des Versuchsraums definiert werden, die einen vorgegebenen Abstand zu dem ersten Versuchspunkt nicht überschreiten, bis das extrapolierbare Modell gebildet werden kann, welches basierend einem aktuell vorgegebenen Versuchspunkt und der nächsten Nachbarn versuchspunktspezifisch neu berechnet wird.

Der Versuchsraum wird daher bevorzugt zunächst von innen nach außen gefüllt, bis es möglich ist, mithilfe eines extrapolierbaren Modells oder mithilfe mehrerer extrapolierbarer Modelle die Versuchspunkte den Grenzen des Versuchsraums anzunähern, die sowohl die Eingangsbeschränkungen als auch die Ausgangsbeschränkungen berücksichtigen.

Gemäß einer weiteren Ausgestaltung des Verfahrens ist vorgesehen, dass die Versuchspunkte sequenziell den Versuchsraum füllend anhand eines Distanzkriteriums innerhalb des Versuchsraums berechnet werden, wobei das Distanzkriterium einen Abstand des nächsten zu berechnenden Versuchspunkts zu einem oder zu mehreren der vorherigen Versuchspunkte innerhalb des Versuchsraums definiert.

Beispielsweise kann vorgesehen sein, dass das Distanzkriterium einen Abstand des nächsten zu berechnenden Versuchspunkts zu einem oder zu mehreren der vorherigen Versuchspunkte innerhalb des Versuchsraums maximiert.

Mithilfe des Distanzkriteriums kann z.B. erreicht werden, dass gezielt diejenigen Bereiche des Versuchsraums mit Versuchspunkten abgedeckt werden, in denen bis dato keine oder nur wenige Versuchspunkte vorhanden sind.

Das Distanzkriterium kann eine Versuchspunktberechnung innerhalb des Versuchsraums z.B. anhand einem der folgenden Prinzipien durchführen: maximin, minimax, maxmean, Audze-Eglais oder dergleichen.

Ein solcher mithilfe des Distanzkriteriums ermittelter Versuchspunkt kann vor der Übergabe des betreffenden Versuchspunkts an die Gießprozesssimulation mittels des voranstehend beschriebenen extrapolierbaren Modells oder mittels der voranstehend beschriebenen extrapolierbaren Modelle auf die Einhaltung der Ausgangbeschränkung überprüft werden. Sofern eine Ausgangsbeschränkung verletzt wird, wird der Versuchspunkt verworfen und stattdessen ein weiterer Versuchspunkt mittels des Distanzkriteriums bestimmt. Jeder der nach dem verworfenen Versuchspunkt vorgeschlagenen Versuchspunkte wird wiederum auf die Einhaltung der Ausgangbeschränkung überprüft und erst nach dem Feststellen der Einhaltung der Ausgangsbeschränkungen als Versuchspunkt an die Gießprozesssimulation übergeben.

Es kann vorgesehen sein, dass der Versuchspunkt verworfen und ein neuer Versuchspunkt anhand des extrapolierbaren Modells auf einer Grenze der Ausgangbeschränkung bestimmt wird.

Alternativ kann vorgesehen sein, dass der Versuchspunkt mittels des extrapolierbaren Modells verschoben wird, wobei ein Sicherheitsabstand zu der Grenze der Ausgangbeschränkung ein-gehalten wird.

Die Kombination des Distanzkriteriums mit einem extrapolierbaren Modell für eine Ausgangsbeschränkung oder mit mehreren extrapolierbaren Modellen für eine oder mehrere Ausgangsbeschränkungen ermöglicht daher ein zügiges Füllen des Versuchsraums unter Berücksichtigung von praxisrelevanten Prozessgrenzen.

Ein entscheidender Aspekt ist hierbei die sequenzielle Durchführung der Bestimmung der Versuchspunkte und die sequenzielle Simulation der Versuchspunkte.

Denn für jeden mittels der Versuchspunktberechnung berechneten Versuchspunkt werden die bereits für vorhergehende simulierte Versuchspunkte berechneten Ergebnisse der Gießprozesssimulation berücksichtigt, um die Qualität der Auswahl bzw. der Berechnung des jeweils nächsten Versuchspunkts zu verbessern. Es wird daher mit weniger Versuchspunkten ein Eingangsbeschränkungen und Ausgangsbeschränkungen berücksichtigender Versuchsraum abgedeckt, als es mit der klassischen eingangs beschriebenen Versuchsplanung möglich wäre, die bereits vor der ersten Gießprozesssimulation alle Versuchspunkte vordefiniert und festgelegt.

Für jeden Versuchspunkt können einer oder mehrere Prozessparameter vorgegeben werden, ausgewählt aus: Schmelztemperatur, Fülldruck bzw. Druckkurve, Druckhaltezeit, Füllzeit, Nebenzeit, Aushärtezeit, Form-Öffnungszeit, Kühlparameter, Ein/Aus-Zeiten. Diese Liste ist nicht abschließend, sondern beispielhaft zu verstehen, und kann entsprechend der an einer Gießvorrichtung einstellbaren und/oder messbaren Parameter bedarfsgerecht ergänzt bzw. reduziert werden.

Für aufeinanderfolgende Versuchspunkte wird wenigstens einer der Prozessparameter verändert oder es werden mehrere Prozessparameter verändert.

### Durchführung der Gießprozesssimulation

Die Gießprozesssimulation dient dazu, den realen Gießprozesses virtuell nachzubilden. Hierzu müssen die physikalischen Gegebenheiten möglichst genau innerhalb der Gießprozesssimulation hinterlegt sein, wie zum Beispiel die Dimensionen, Materialien und Formen der Bauteile der virtuellen Gießvorrichtung, entsprechende Wärmeleit- und Wärmeübergangskoeffizienten, das Fließ-, Temperatur- und Erstarrungsverhalten der Schmelze sowie die entsprechenden Freiheitsgrade, um die Prozessparameter des realen Gießprozesses innerhalb der Simulation nachbilden zu können. Es ist ersichtlich, dass eine derartige Gießprozesssimulation hohe Rechenkapazitäten erfordert.

Ziel der Gießprozesssimulation ist es, die Bauteilqualität für einen entsprechenden Versuchspunkt sowie das Maschinenverhalten möglichst genau und realitätsgetreu vorherzusagen.

Ein Ausgangsparameter der Gießprozesssimulation ist erfindungsgemäß ein Gussteildefekt des Gießbauteils, wie eine Porosität, Lunker, Blasen, ein Kaltlauf oder dergleichen oder oben genannte kritische Ausgänge bzw. Ausgangsbeschränkungen, wie beispielsweise die vollständige Füllung der Form oder dergleichen. Als Ausgangsparameter können zwei oder mehr Qualitätsmerkmale, wie die voranstehend genannte Porosität oder der Kaltlauf, sowie Lunker oder Blasen, mittels der Gießprozesssimulation bestimmt werden, insbesondere in vorab definierten Bauteilbereichen bestimmt werden.

Ein Ausgangsparameter der Gießprozesssimulation ist erfindungsgemäß ein Maschinenparameter, wie eine Werkzeugtemperatur der virtuellen Gießform an einer vorgegebenen Position oder dergleichen. Die Gießprozesssimulation kann hierzu beispielsweise ein virtuelles Thermoelement bzw. einen virtuellen Temperatursensor aufweisen, der ein Verhalten eines realen Temperatursensors bzw. eines realen Thermoelements möglichst genau nachbildet. Die Gießprozesssimulation kann mehrere virtuelle Thermoelemente bzw. virtuelle Temperatursensoren aufweisen, die ein Verhalten realer Temperatursensoren bzw. realer Thermoelemente möglichst genau nachbilden. Alternativ oder ergänzend kann eine simulierte Temperatur eines Punkts einer Oberfläche der virtuellen Gießform oder mehrere Punkte der Oberfläche der virtuellen Gießform herangezogen werden.

Als Ausgangsparameter der Gießprozesssimulation können zwei oder mehr Maschinenparameter bestimmt werden, insbesondere solche Maschinenparameter, die auch an einer realen Gießvorrichtung mittels entsprechender Sensoren oder der Maschinensteuerung bestimmbar sind.

Wie zuvor bereits erwähnt, ist das Erreichen des stationären Zustands für einen Versuchspunkt eine wichtige Randbedingung, um in einem realen Prozess eine zuverlässige, wiederholgenaue, d. h. robuste Prozessführung zu ermöglichen.

Erfindungsgemäß ist vorgesehen, dass der stationäre Zustand innerhalb der Gießprozesssimulation als erreicht gilt, sofern eine Veränderung der Temperatur der virtuellen Gießform für aufeinanderfolgende Gießbauteile einen vorgegebenen Schwellwert unterschreitet. Hierbei kann beispielsweise eine zweifache Standardabweichung eines Sensorrauschens als Grenzwert genutzt werden.

Insbesondere kann vorgesehen sein, dass der stationäre Zustand innerhalb der Gießprozesssimulation als erreicht gilt, sofern eine Veränderung der Formtemperatur an den virtuellen Thermoelementen der virtuellen Gießform oder eine Veränderung der Gussteildefekte in den definierten Bauteilbereichen für aufeinanderfolgende Gießbauteile einen vorgegebenen Schwellwert unterschreitet.

### Durchführung der Optimierung

Die Optimierung dient dazu, möglichst effizient einen robusten, stationären Versuchspunkt zu ermitteln, wobei die Optimierung auf Grundlage mindestens eines Metamodells durchgeführt wird, das ein Modell der Gießprozesssimulation ist - mit anderen Worten daher ein Modell vom Modell ist.

Ein solches Metamodell dient insbesondere dazu, die Wechselwirkungen und komplexen Mehrfachabhängigkeiten zwischen den Prozessparametern als Eingangsparametern und den Ausgangsparametern, die beispielsweise eine zu erreichende Bauteilqualität betreffen, in ein mathematisches Modell zu überführen, sodass die Ausgangsparameter für vorgegebene Eingangsparameter in einer zur Gießprozess-simulation vergleichbaren Qualität vorhergesagt werden können.

Sofern ein solches Metamodell im weiteren Verlauf durch praktische Versuchsdaten ergänzt wird, kann die Qualität der Vorhersage der Ausgangsparameter durch das mathematische Modell im Vergleich zur reinen Gießprozesssimulation gegebenenfalls sogar gesteigert werden.

Der Begriff des robusten, stationären Optimums bedeutet dabei erfindunsgemäß, dass für den betreffenden Versuchspunkt der stationäre Zustand einer Temperatur der Gießform erreicht ist, wobei zudem eine geringe Sensibilität gegenüber Parameterschwankungen in der Umgebung des Versuchspunkts vorliegt. Der Begriff "robust" bedeutet daher mit anderen Worten "stabil", sodass für geringfügige Schwankungen einer oder mehrerer Prozessparameter weiterhin eine zufriedenstellende Bauteilqualität erreicht werden kann.

Der Begriff des robusten, stationären Optimums bedeutet dabei weiter insbesondere, dass für den betreffenden Versuchspunkt der stationäre Zustand einer bzw. mehrerer Temperaturen oder aber der Bauteildefekte der Gießform erreicht ist, wobei zudem eine geringe Sensibilität gegenüber Parameterschwankungen in der Umgebung des Versuchspunkts vorliegt.

Beispielsweise kann ein Metamodell für mindestens einen Gussteildefekt erstellt werden, wie eine Porosität, einen Kaltlauf oder dergleichen. Sofern die Optimierung auf eine Minimierung der Porosität des Gussbauteils gerichtet ist, kann anhand des betreffenden Metamodells daher ein Versuchspunkt ermittelt werden, für den die Porosität sowie die Streuung der Porosität oder die Porosität im Worst-Case-Scenario bei Prozessparametervariationen minimal ist, wobei dem Versuchspunkt zugeordnete Prozessparameter angegeben werden können.

Eine solche Optimierung kann auch eine Mehrzieloptimierung sein, wobei sowohl die Porosität als auch der Kaltlauf für ein betreffendes Gießbauteil minimiert werden sollen. In diesem Fall ist das Optimum mit seinen zugeordneten Prozessparametern ein Versuchspunkt, für den ein möglichst niedriger Kaltlauf sowie eine möglichst niedrige Porosität bei gleichzeitiger Minimierung derer Streuungen erreicht werden.

Alternativ oder ergänzend kann für mindestens einen Maschinenparameter ein dynamisches Metamodell erstellt werden, wie beispielsweise eine Werkzeugtemperatur der virtuellen Gießform an einer vorgegebenen Position oder dergleichen. Ein solches Metamodell bildet insbesondere auch eine Dynamik des Gießprozesses beim Erwärmen der Gießform durch aufeinanderfolgende Gießzyklen ab, da erfindungsgemäß für jeden Versuchspunkt alle Bauteile bis zum Erreichen des stationären Zustands bezüglich der Ausgangsparameter ausgewertet werden. Die Daten der Gießprozesssimulation, auf deren Grundlage das Metamodell ermittelt wird, enthalten daher auch Daten zu Dynamik des Gießprozesses. Diese dynamischen Modelle können insbesondere als Randbedingung zur Detektion bzw. Vorhersage des stationären Zustands im Zuge der Optimierung genutzt werden.

Das Metamodell ist erfindunsgemäß ein KI-Modell, wie ein neuronales Netz oder dergleichen, wobei das KI-Modell auf Grundlage der Prozessparameter der Versuchspunkte und der Ausgangsparameter der Gießprozesssimulation trainiert und validiert wird.

Das Metamodell kann ein KI-Modell sein, wie ein neuronales Netz oder dergleichen, insbesondere ausgeführt als lokal lineares Modellnetz mit nur einer verdeckten Schicht, wobei das KI-Modell auf Grundlage der Prozessparameter der Versuchspunkte und der Ausgangsparameter der Gießprozesssimulation bzw. der realen Gießversuche trainiert und validiert wird.

Es können daher lokal lineare Modelle als KI-Modelle verwendet werden, die eine schnelle Berechnung ermöglichen.

Insbesondere kann das KI-Modell daher ein neuronales Netz mit einem einzigen hidden layer sein, wobei der hidden layer insbesondere ein dense layer ist.

Das Validieren des KI-Modells kann die folgenden Verfahrensschritte umfassen: Bestimmen einer Modellgüte des KI-Modells, indem für einen Validierungs-Versuchspunkt ein Ausgangsparameter der Gießprozesssimulation mit einer Vorhersage des KI-Modells für den Ausgangsparameter dieses Validierungs-Versuchspunkts verglichen wird, wobei eine Freigabe des KI-Modells erfolgt, sofern eine vorgegebene Modellgüte erreicht ist oder eine Wiederholung der Validierung für einen oder mehrere weitere Versuchspunkte erfolgt, sofern die vorgegebene Modellgüte nicht erreicht ist, wobei vor der erneuten Validierung die Ausgangsparameter der Gießprozesssimulation für den Validierungs-Versuchspunt zum Trainieren des KI-Modells genutzt werden.

Es kann vorgesehen sein, dass ein Verhältnis der Anzahl der Trainingspunkte (Versuchspunkte) zur Anzahl der Validierungs-Versuchspunkte vorgegeben ist und beispielweise 80:20 beträgt oder 70:30 beträgt. Mit der Anzahl der Trainingspunkte erhöht sich dementsprechend die erforderliche Anzahl der Validierungs-Versuchspunkte.

Es kann demnach eine Validierungsschleife in voranstehend beschriebene Weise so lange durchgeführt werden, bis die vorgegebene Modellgüte erreicht ist. Beispielsweise kann vorgesehen sein, dass die vorgegebene Modellgüte zur Validierung dann erreicht ist, wenn ein Bestimmtheitsmaß größer als 0,8 ist, insbesondere größer als 0,9 ist, insbesondere größer als 0,95 ist.

Es werden daher insbesondere nur genau so viele Gießprozesssimulationen durchgeführt, bis ein betreffendes Metamodell eine ausreichende Qualität erreicht hat, um eine Optimierung zur Bestimmung eines robusten, stationären Optimums zu ermöglichen.

Die Anzahl der erforderlichen Versuchspunkte für die Gießprozesssimulation ist dabei bauteilspezifisch und hängt von den betreffenden Eingangsbeschränkungen und Ausgangsbeschränkungen ab. Mit der gegenständlichen Vorgehensweise wird daher schergestellt, dass eine ausreichende Anzahl von Gießprozesssimulationen, jedoch nicht zu viele Gießprozesssimulationen durchgeführt werden.

Der Versuchsplan wird dabei dynamisch in Abhängigkeit von den Ergebnissen der Simulation der Versuchspunkte erzeugt.

Alternativ zu den voranstehend beschriebenen KI-Modellen können die Metamodelle auch als Polynome oder Klassifikationsmodelle angegeben werden.

Es kann vorgesehen sein, dass mittels der Versuchspunktberechnung Versuchspunkte in der Umgebung des robusten, stationären Optimums berechnet werden und diese Versuchspunkte in der Umgebung des robusten, stationären Optimums anhand des Metamodells ausgewertet werden.

Mithilfe eines betreffenden Metamodells lässt sich dabei Vorhersagen, wie sensitiv ein betreffendes Optimum für Parameterschwankungen in der Umgebung der Prozessparameter eines gefundenen Optimums ist. Wird beispielsweise für eine bestimmte Schmelzetemperatur anhand des betreffenden Metamodells eine sehr geringe Porosität vorhergesagt, so kann bei ansonsten gleich bleibenden Prozessparametern die Schmelzetemperatur um wenige Grad variiert werden, um anhand des Metamodells vorherzusagen, ob die Porosität durch diese Variation stark zunimmt, dass gefundene Optimum daher instabil und nicht robust wäre, oder ob in der Umgebung des betreffenden Optimums weiterhin eine geringe Porosität auch dann vorliegt, wenn die betreffenden Temperaturschwankungen in den Prozessparametern vorgegeben werden, und das gefundene Optimum daher stabil bzw. robust ist.

Mittels der Variationen der Parameter wird daher überprüft, ob ein betreffendes stationäres Optimum tatsächlich ein robustes, stationäres Optimum ist oder nicht. Können im Rahmen einer Optimierung bzw. einer Mehrzieloptimierung mehrere stationäre Optima gefunden werden, so kann insbesondere dasjenige stationäre Optimum ausgewählt werden, dass für Parameterschwankungen die geringste Sensitivität und den größten Abstand zu den Versuchsraumgrenzen aufweist, und demnach das robusteste der ermittelten stationären Optima ist.

Gemäß einer Ausgestaltung des Verfahrens kann vorgesehen sein, dass das robuste, stationäre Optimum vor dem Durchführen des Gießprozesses mittels der Gießprozesssimulation validiert wird und insbesondere Versuchspunkte in der Umgebung des robusten, stationären Optimums mittels der Gießprozesssimulation validiert werden.

Es kann vorgesehen sein, dass die Optimierung eine robuste Mehrzieloptimierung ist.

### Durchführung des Gießprozesses

Ziel der voranstehend beschriebenen Verfahrensschritte ist es, die Anzahl der erforderlichen realen Versuche, die mit der Gießvorrichtung durchgeführt werden müssen, möglichst gering zu halten. Die Versuchspunktberechnung, die Gießprozesssimulation und die Optimierung dienen daher dazu, einen möglichst guten Ausgangspunkt für praktische Versuche zu finden, und zu vermeiden, Versuchspunkte mit schlechten Erfolgsaussichten aufgrund mangelnder Prozesskenntnis zu fahren.

Die Durchführung des Gießprozesses dient insbesondere auch zur Validierung und/oder zur Verbesserung der voranstehend beschriebenen extrapolierbaren Modelle und der Metamodelle. Denn Versuchsergebnisse der praktischen Versuche können zur Bestätigung der Ergebnisse der extrapolierbaren Modelle und der Metamodelle, zur Verbesserung der extrapolierbaren Modelle und der Metamodelle und zum Neurechnen der extrapolierbaren Modelle und der Metamodelle dienen.

Gemäß einer Ausgestaltung des Verfahrens kann vorgesehen sein, dass ausgehend von einem möglichen robusten, stationären Optimum weitere Versuchspunkte mittels des Gießprozesses gefahren werden, insbesondere Versuchspunkte in der Umgebung des möglichen robusten, stationären Optimums, um das mögliche robuste, stationäre Optimum als das robuste, stationäre Optimum zu bestätigen. Wie voranstehend bereits für die Gießprozesssimulation beschrieben, dient eine Parametervariation in der Umgebung des betreffenden Optimums dazu, die Robustheit des betreffenden stationären Optimums zu überprüfen.

Die Prüfung der Robustheit kann durch eine Analyse der Streuung der Ausgangsparameter oder ein Worst-Case-Scenario bewertet werden.

Es kann vorgesehen sein, dass die Reihenfolge der Versuchspunkte ausgehend von dem robusten, stationären Optimum mit aufsteigendem Abstand im Versuchsraum sortiert werden und/oder vor dem Hintergrund einer Energie- und/oder Zeiteffizienz sortiert werden.

Erfindungsgemäß ist vorgesehen, dass Sensordaten von Sensoren der Gießvorrichtung zur Validierung und/oder Verbesserung und/oder Neuerstellung des Metamodells oder der Metamodelle verwendet werden. Beispielsweise kann für den Fall, dass es sich bei dem betreffenden Metamodell um ein KI-Modell handelt, ein Bestimmtheitsmaß des KI-Modells im Vergleich zu den realen Versuchsergebnissen verbessert werden. So kann insbesondere ein Bestimmtheitsmaß von über 0,9 erreicht werden, insbesondere von über 0,95 erreicht werden. Es handelt sich in diesem Fall um ein hybrides KI-Modell, das sowohl auf Grundlage von simulierten Daten als auch von praktisch ermittelten Daten trainiert und validiert wird.

Es kann vorgesehen sein, dass Sensordaten von Sensoren der Gießvorrichtung zur Validierung und/oder Verbesserung und/oder Neuerstellung mindestens eines extrapolierbaren Modells verwendet werden. Die voranstehend für das Metamodell beschriebenen Aspekte gelten gleichermaßen auch für ein betreffendes extrapolierbares Modell. Auch hier kann das Bestimmtheitsmaß durch die Einbindung realer Versuchsergebnisse und Sensordaten verbessert werden.

Auch im Rahmen der Bestimmung von Versuchspunkten für den praktischen Gießprozess kann die Versuchspunktberechnung verwendet werden, um neue Versuchspunkte zu bestimmen und um die Einhaltung von Ausgangsbeschränkungen zu überprüfen.

Der Gießprozess kann ein Niederdruck-Gießverfahren sein, insbesondere für metallische Schmelze.

Der Gießprozess kann ein Verfahren zum Aluminium-Niederdruckguss sein.

Der Gießprozess kann ein Gießprozess mit wiederverwendbarerer oder verlorener Form sein.

Der Gießprozess kann ein Verfahren zum Schwerkraftgießen sein, insbesondere für metallische Schmelze.

Zur Temperaturmessung können Thermoelemente verwendet und/oder Thermografiebilder erfasst werden.

Erfindungsgemäß wird ein weiteres Verfahren zur Prozessauslegung für eine Gießvorrichtung angegeben, mit den Verfahrensschritten: Durchführung einer Versuchspunktberechnung, wobei einem jeweiligen Versuchspunkt Prozessparameter eines Gießprozesses für ein Gießbauteil zugeordnet sind, wobei eine Anzahl von Prozessparametern einen n-dimensionalen Versuchsraum definiert und wobei die Versuchspunkte sequenziell den Versuchsraum füllend innerhalb des Versuchsraums berechnet und an einen Gießprozess übergeben werden, Durchführung des Gießprozesses, wobei sequenziell für die von der Versuchspunktberechnung übergebenen Versuchspunkte die Herstellung des Gießbauteils anhand der dem jeweiligen Versuchspunkt zugeordneten Prozessparameter durchgeführt wird, wobei für jeden Versuchspunkt in einer Gießform der Gießvorrichtung das sequenzielle Herstellen von zwei oder mehr Gießbauteilen durchgeführt wird, bis die Temperatur der Gießform einen stationären Zustand erreicht hat, wobei für jedes Gießbauteil eines Versuchspunkts eine Auswertung eines Ausgangsparameters oder mehrerer Ausgangsparameter erfolgt; Durchführung einer Optimierung, wobei anhand der Prozessparameter und der zugeordneten Ausgangsparameter mindestens ein Metamodell des Gießprozesses für zumindest einen Teil des n-dimensionalen Versuchsraums erstellt wird, wobei für einen der Ausgangsparameter oder für mehrere der Ausgangsparameter ein robustes, stationäres Optimum mit seinen zugeordneten Prozessparametern ermittelt wird; Weitere Durchführung des Gießprozesses, wobei mindestens ein Gießbauteil mittels einer Gießvorrichtung hergestellt wird, wobei die dem robusten, stationären Optimum zugeordneten Prozessparameter als Prozessparameter der Gießvorrichtung verwendet werden und wobei eine Auswertung eines Ausgangsparameters oder mehrerer Ausgangsparameter für das Gießbauteil erfolgt.

Dieses weitere erfindungsgemäße Verfahren unterscheidet sich dadurch von der voranstehend beschriebenen Ausgestaltung, dass statt der Simulation reale, praktische Versuche verwendet werden, um Daten für das Metamodell zu sammeln und das Metamodell auf Grundlage dieser Daten zu Erstellen. Alle voranstehend beschriebenen Aspekte zur Versuchspunktberechnung und Optimierung lassen sich daher auch auf diese Variante des erfindungsgemäßen Verfahrens anwenden.

Weiter kann ein erfindungsgemäßes Verfahren angegeben werden, das einen hybriden Ansatz verfolgt, wobei Versuchspunkte zur Datengewinnung für das Metamodell sowohl mittels der Simulation als auch mittels praktischer Versuche gefahren werden.

Erfindungsgemäß wird daher ein weiteres Verfahren zur Prozessauslegung für eine Gießvorrichtung angegeben, mit den Verfahrensschritten: Durchführung einer Versuchspunktberechnung, wobei einem jeweiligen Versuchspunkt Prozessparameter eines Gießprozesses für ein Gießbauteil zugeordnet sind, wobei eine Anzahl von Prozessparametern einen n-dimensionalen Versuchsraum definiert und wobei die Versuchspunkte sequenziell den Versuchsraum füllend innerhalb des Versuchsraums berechnet und an einen simulierten Gießprozess und/oder einen praktischen Gießprozess übergeben werden, Durchführung des simulierten Gießprozesses und/oder des Gießprozesses, wobei sequenziell für die von der Versuchspunktberechnung übergebenen Versuchspunkte die Herstellung des Gießbauteils anhand der dem jeweiligen Versuchspunkt zugeordneten Prozessparameter simuliert und/oder durchgeführt wird, wobei für jeden Versuchspunkt in einer virtuellen Gießform der Gießvorrichtung und/oder in einer Gießform der Gießvorrichtung das sequenzielle Herstellen von zwei oder mehr Gießbauteilen durchgeführt wird, bis die Temperatur der virtuellen Gießform und/oder der Gießform einen stationären Zustand erreicht hat, wobei für jedes Gießbauteil eines Versuchspunkts eine Auswertung eines Ausgangsparameters oder mehrerer Ausgangsparameter erfolgt; Durchführung einer Optimierung, wobei anhand der Prozessparameter und der zugeordneten Ausgangsparameter mindestens ein Metamodell für zumindest einen Teil des n-dimensionalen Versuchsraums erstellt wird, wobei für einen der Ausgangsparameter oder für mehrere der Ausgangsparameter ein robustes, stationäres Optimum mit seinen zugeordneten Prozessparametern ermittelt wird; Weitere Durchführung des Gießprozesses, wobei mindestens ein Gießbauteil mittels einer Gießvorrichtung hergestellt wird, wobei die dem robusten, stationären Optimum zugeordneten Prozessparameter als Prozessparameter der Gießvorrichtung verwendet werden und wobei eine Auswertung eines Ausgangsparameters oder mehrerer Ausgangsparameter für das Gießbauteil erfolgt.

### Regelung der Gießvorrichtung

Weiter betrifft die Erfindung ein Verfahren zur Regelung einer Gießvorrichtung, mit den Verfahrensschritten: Bereitstellen eines erfindungsgemäßen Metamodells; Regelung von Prozessparametern der Gießvorrichtung im Bereich des robusten, stationären Optimums.

Aufgrund der Auswertung aller Zyklen eines betreffenden Versuchspunkts, kann mittels des Metamodells bzw. der Metamodelle das dynamische Verhalten einer Gießform ausgehend vom kalten Zustand abgebildet werden. Mithilfe des Metamodells können daher Prozessparameter angegeben werden, die nach einem Kaltstart der Maschine schneller das Herstellen von Gutteilen sowie das Erreichen des stationären Zustands ermöglichen. Der zyklische Temperaturverlauf einer Gießform entspricht dabei im Wesentlichen einem PT1-Verhalten. Dieses Verhalten kann mittels eines Metamodells abgebildet werden, da die entsprechenden Daten mithilfe der Gießprozesssimulation und insbesondere anhand praktischer Versuche ermittelt worden und die Datengrundlage des Metamodells sind.

Das Metamodell oder die Metamodelle können laufend anhand weiterer Daten adaptiert werden, wodurch sich gegebenenfalls auch eine Adaption des robusten Optimums und/oder der modellbasierten Regelung ergibt.

Nachfolgend wird die Erfindung anhand einer Ausführungsbeispiele darstellenden Zeichnung näher beschrieben. Es zeigen jeweils schematisch:
- Fig. 1A: eine Gießvorrichtung mit einem Gussbauteil;
- Fig. 1B: eine virtuelle Gießvorrichtung;
- Fig. 2: Versuchspunkte ein einem Versuchsraum;
- Fig. 3: einen Ablaufplan eines erfindungsgemäßen Verfahrens.

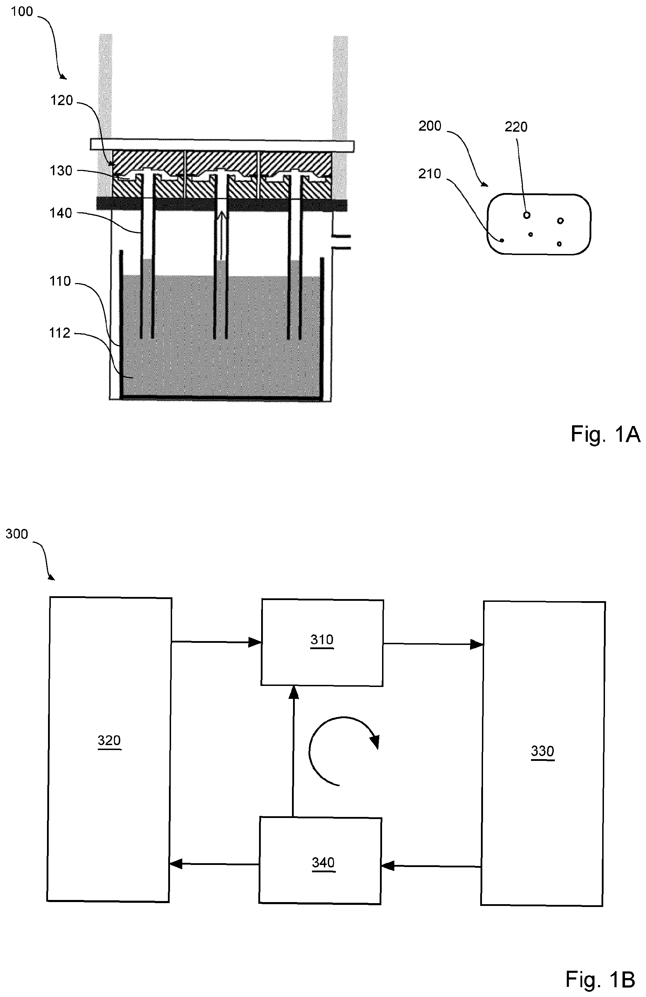

Fig. 1A zeigt eine Gießvorrichtung 100. Die Gießvorrichtung 100 ist zur Herstellung von Aluminium-Gussbauteilen 200 vorgesehen.

Die Gießvorrichtung 100 hat einen Schmelztiegel 110, in dem Aluminiumschmelze 112 bevorratet ist. Die Gießvorrichtung 100 hat eine Gießform 120 mit Formnestern 130, wobei die Aluminiumschmelze 112 über Rohrleitungen 140 in die Formnester 130 einbringbar ist.

Ein mittels der Gießvorrichtung 100 hergestelltes Aluminium-Gussbauteil 200 weist Gussdefekte, d.h. Poren 210 bzw. Fehlstellen 220 auf. Die Anzahl und Ausprägung einer Porosität und der Fehler in einem Bauteil bestimmen die Bauteilqualität.

Soweit es sich bei dem Aluminium-Gussbauteil 200 um ein neues Bauteil handelt, für das noch keine stabilen Prozessparameter zum Betreiben der Gießvorrichtung 100 bekannt sind, bestehen insbesondere zwei Herausforderungen. Zum einen soll möglichst schnell und mit geringem Aufwand ein stabiler Prozess aufgesetzt werden, der eine zuverlässige Herstellung des Aluminium-Gussbauteils 200 in vorgegebener Qualität ermöglicht. Zum anderen sollen diejenigen Prozessparameter ermittelt werden, die maßgeblich für das Entstehen von Defekten bzw. Fehlstellen an dem Bauteil verantwortlich sind.

Um die Anzahl der erforderlichen realen Versuche zum Auffinden stabiler Prozessparameter zu reduzieren, wird vorliegend eine virtuelle Gießvorrichtung 300 verwendet, um den Gießprozess zu simulieren (Fig. 1B).

Hierzu wird eine Gießprozesssimulation 310 mit Eingangsdaten 320 versorgt, um Versuchspunkte mit vorgegebenen Prozessparametern zu simulieren. Zu den Eingangsdaten zählen beispielsweise eine Schmelzetemperatur, eine Druckkurve, eine Druckhaltezeit, eine Erstarrung, eine Formöffnungszeit, Kühlparameter und dergleichen. Ein Parametersatz eines Versuchspunkts umfasst daher vorgegebene Werte für diese Eingangsdaten, wobei für einen vorgegebenen Versuchspunkt so lange sequenziell virtuelle Bauteile hergestellt werden, bis eine Temperatur der Gießform oder mehrere Temperaturen der Gießform, je nach Anzahl der virtuellen oder realen Thermoelemente, einen stationären Zustand erreicht hat.

Für jedes virtuell gefertigte Bauteil werden Ausgangsparameter 330 ermittelt, wie zum Beispiel Bauteildefekte oder eine Porosität oder auch Temperaturen der Form anhand von virtuellen Temperatursensoren sowie kritische Ausgangsgrößen für den sicheren Betrieb der Anlage.

Die Daten der Gießprozesssimulation 310 werden zum Trainieren eines Metamodells in Form eines KI-Modells 340 verwendet.

Sobald das KI-Modell 340 die Ergebnisse der Gießprozesssimulation 310 ausreichend genau widerspiegelt, d. h. das Training des KI-Modells 340 abgeschlossen ist und das Kl-Modell 340 validiert ist, können mithilfe einer Mehrzieloptimierung Prozessparameter für einen stationären Zustands der Formtemperatur ermittelt werden, die einerseits eine stabile Prozessführung und andererseits eine ausreichende Bauteilqualität gewährleisten - und zwar zunächst rein virtuell betrachtet anhand der Gießprozess-Simulation 310 und anhand des KI-Modells 340. Diese Prozessparameter gehören daher zu einem Versuchspunkt, der als robustes, stationäres Optimum bezeichnet werden kann.

Dieses virtuell ermittelte Optimum ist die Grundlage des ersten realen Gießversuchs mittels der Gießvorrichtung 100. Während des realen Gießversuchs werden mittels Temperatursensoren eine Temperatur der Schmelze sowie der Gießform an verschiedenen Positionen gemessen. Diese Messwerte sowie eine real ermittelte Bauteilqualität werden wiederum dazu verwendet, dass KI-Modell 340 weiter zu verbessern, d.h. zu trainieren und zu validieren oder neu zu rechnen.

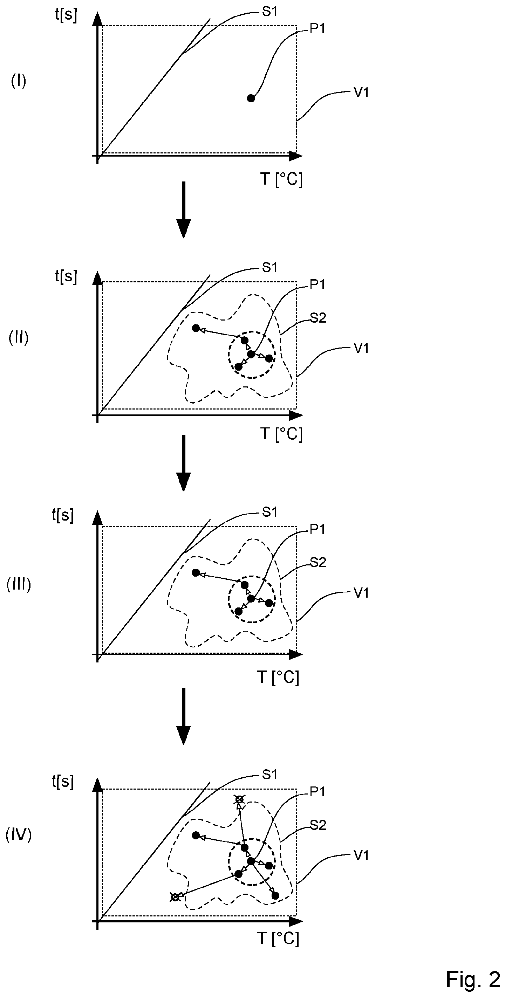

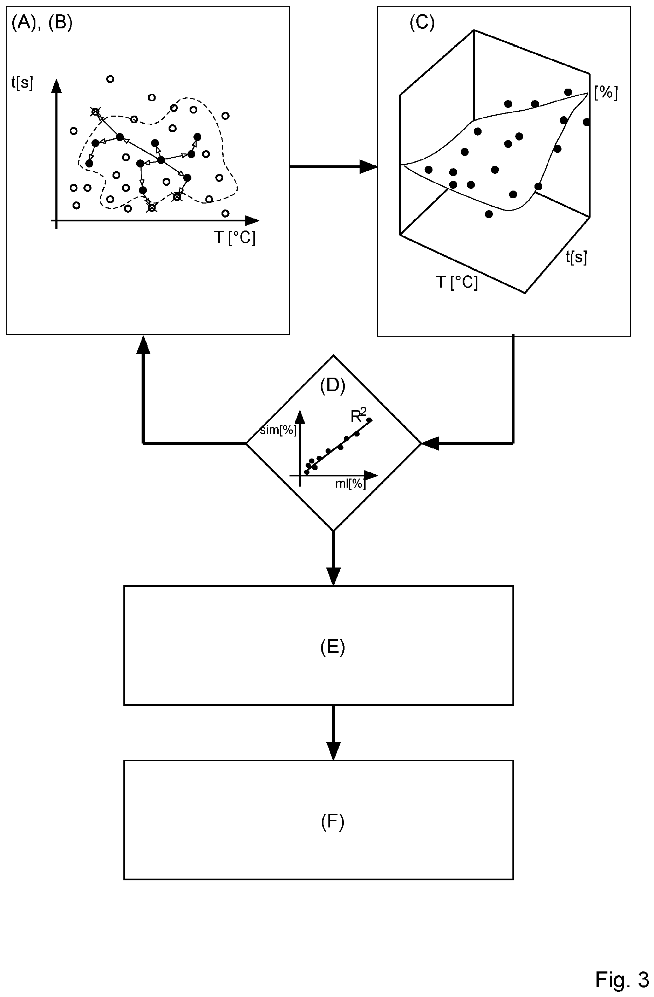

Anhand der Figuren 2 und 3 wird nachfolgend das Bereitstellen des KI-Modells 340 näher erläutert. Entscheidend für die Qualität des KI-Modells 340 und für die Effizienz während des Erstellens des KI-Modells ist hierbei insbesondere die Wahl der ersten Versuchspunkte bzw. des ersten Versuchspunkts sowie die Vorgabe des teilweise bekannten Versuchsraums.

Der Versuchsraum ist vorliegend mehrdimensional, da für alle voranstehend genannten Eingangsdaten grundsätzlich jeweils ein breiter Wertebereich möglich ist und jeder Einzelwert eines betreffenden Parameters theoretisch mit allen denkbaren Kombinationen und Variationen aller Einzelwerte aller weiterer Parameter kombinierbar ist.

Zur Vereinfachung der nachstehenden Ausführungen werden in Fig. 2 lediglich Versuchspunkte für zwei Eingangsparameter diskutiert. Es sollte jedoch ersichtlich sein, dass sich die anhand von Fig. 2 beschriebene Vorgehensweise auf mehrdimensionale Parametersätze anwenden lässt.

Fig. 2 zeigt in einem Diagramm (I) schematisch einen rechteckigen Versuchsraum V1, wobei eine Schmelzetemperatur T in °Celsius auf der Abszisse und eine Formöffnungszeit t in Sekunden auf der Ordinate aufgetragen sind.

In einer Gießprozess-Simulation wäre grundsätzlich der gesamte im Diagramm (I) gezeigten Versuchsraum anhand von Versuchspunkten simulierbar, wobei für jeden Versuchspunkt, wie eingangs bereits beschrieben, sequenziell eine Anzahl von Bauteilen virtuell gefertigt werden könnte, bis der stationäre Zustand für eine oder mehrere Temperaturen der Gießform erreicht ist.

Nicht jeder der im Diagramm (I) dargestellten Versuchspunkte ist jedoch in der Praxis mittels der Gießvorrichtung 100 überhaupt fahrbar, oder jedenfalls nicht fahrbar, ohne dabei die Gießvorrichtung 100, die Gießform 120 oder weitere Bauteil zu beschädigen (Eingangsbeschränkungen und Ausgangsbeschränkungen). Die Eingangsbeschränkungen sind schematisch durch eine Schranke S1 repräsentiert, wobei alle Versuchspunkte links der Schranke nicht fahrbar sind, während alle Versuchspunkte rechts der Schranke fahrbar sind - unter Berücksichtigung der Eingangsbeschränkungen.

Weiter ermöglicht nicht jeder der dargestellten Versuchspunkte in der Praxis die Herstellung eines Gussbauteils in vorgegebener Qualität (Ausgangsbeschränkungen). Der Versuchsraum wird daher zusätzlich durch Ausgangsbeschränkungen eingeschränkt, wie durch die Schranke S2 schematisch dargestellt. In Fig. 2 zeigt das Diagramm (II) die Schranke S2 als eine gestrichelte Linie, wobei die innerhalb dieser gestrichelten Linie angeordneten Versuchspunkte in der Realität fahrbare Versuchspunkte sind und die außerhalb dieser Linie liegenden Versuchspunkte in der Realität nicht fahrbare Versuchspunkte sind.

Die in der Realität fahrbaren Versuchspunkte sind somit durch verschiedene Eingangsbeschränkungen und Ausgangbeschränkungen limitiert. So führt beispielsweise eine zu geringe Schmelzetemperatur zu einer mangelhaften Formfüllung und zu fehlerhaften Bauteilen. Weiter muss beispielsweise eine Kühlzeit kleiner sein als eine Schließzeit der Gussform, um Beschädigungen der Gießvorrichtung zu vermeiden. Weiter sollte die Gießform nicht geöffnet werden, bevor die Schmelze vollständig erstarrt ist. Es gibt daher eine Vielzahl limitierender physikalischer und maschinentechnischer Randbedingungen, die die Fahrbarkeit bestimmter Versuchspunkte einschränken.

Diese Eingangsbeschränkungen werden vorliegend bei der Versuchsplanung und vor der Durchführung erster Simulationen berücksichtigt, um zu vermeiden, dass zeitaufwendige Simulationen für Versuchspunkte gerechnet werden, die in der Realität nicht darstellbar sind. Die Ausgangsbeschränkungen sind nicht vorbekannt und werden im Rahmen der Versuche ermittelt. Die Schranke S1 ist daher vor der Simulation des ersten Versuchspunkts bekannt, während die Schranke S2 dynamisch während des Füllens des Versuchsraums ermittelt wird.

Als Startpunkt für einen ersten Versuchspunkt einer Simulation wird bevorzugt ein sicherer Versuchspunkt P1 ausgewählt, der sich für ein ähnliches Bauteil als zuverlässiger bzw. robuster Arbeitspunkt für eine Gießvorrichtung erwiesen hat.

In der Umgebung dieses Versuchspunkte werden anschließend weitere Versuchspunkte simuliert, bis lineare Regression für die betreffenden Ausgangbeschränkungen möglich sind, auf deren Grundlage weitere Versuchspunkte geplant und eine sequenzielle raumfüllende Versuchsplanung durchgeführt werden kann.

So kann durch lineare Extrapolation bereits vor der Durchführung oder Simulation der Versuchspunkte abgeschätzt werden, ob der Versuchspunkt in der Realität darstellbar ist oder nicht, d. h. ob es beispielsweise während der Durchführung eines realen Versuchs mittels der betreffenden Parameter zu einem Maschinenstopp oder zu einer Beschädigung der Maschine, der Gussform oder dergleichen kommen könnte, oder aber ob absehbar ist, dass mit diesen Parametern auf keinen Fall ein Gutteil herstellbar ist.

Die Diagramme (III) und (IV) zeigen das schrittweise Füllen des Versuchsraums, wobei die mit einem Kreuz versehenen Versuchspunkte die von der Versuchsreihe ausgeschlossenen Versuchspunkte darstellen und die schwarz ausgefüllten Versuchspunkte in der Realität fahrbare Versuchspunkte repräsentieren.

Nachfolgend wird ein erfindungsgemäßes Verfahren weiter anhand von Fig. 3 beschrieben.

Ein Verfahrensschritt (A) betrifft die Durchführung einer Versuchspunktberechnung, wobei einem jeweiligen Versuchspunkt Prozessparameter eines Gießprozesses für ein Gießbauteil zugeordnet sind, wobei eine Anzahl von Prozessparametern einer natürlichen Zahl n ≥ 2 entspricht und einen n-dimensionalen Versuchsraum definiert und wobei die Versuchspunkte sequenziell den Versuchsraum füllend innerhalb des Versuchsraums berechnet und an eine Gießprozesssimulation übergeben werden.

Ein Verfahrensschritt (B) betrifft die Durchführung der Gießprozesssimulation, wobei sequenziell für die von der Versuchspunktberechnung übergebenen Versuchspunkte, ausgehend von ersten Versuchspunkt P1, die Herstellung des Gießbauteils anhand der dem jeweiligen Versuchspunkt zugeordneten Prozessparameter simuliert wird, wobei für jeden Versuchspunkt in einer virtuellen Gießform das sequenzielle Herstellen von zwei oder mehr Gießbauteilen simuliert wird, bis die Temperatur der virtuellen Gießform einen stationären Zustand erreicht hat, und wobei für jedes Gießbauteil eines Versuchspunkts eine Auswertung eines Ausgangsparameters oder mehrerer Ausgangsparameter erfolgt.

Ein Verfahrensschritt (C) betrifft die Durchführung einer Optimierung, wobei anhand der Prozessparameter und der zugeordneten Ausgangsparameter mindestens ein Metamodell der Gießprozesssimulation für zumindest einen Teil des n-dimensionalen Versuchsraums erstellt wird, wobei für einen der Ausgangsparameter oder für mehrere der Ausgangsparameter ein robustes, stationäres Optimum mit seinen zugeordneten Prozessparametern ermittelt wird.

Das Metamodell ist ein trainiertes und validiertes Kl-Modell in Form eines neuronalen Netzes. Der Schritt (D) beschreibt das Validieren des KI-Modells mit den Schritten: Bestimmen einer Modellgüte des KI-Modells, indem für einen Validierungs-Versuchspunkt ein Ausgangsparameter der Gießprozesssimulation mit einer Vorhersage des KI-Modells für den Ausgangsparameter dieses Validierungs-Versuchspunkts verglichen wird, wobei eine Freigabe des KI-Modells erfolgt, sofern eine vorgegebene Modell-güte erreicht ist oder eine Wiederholung der Validierung für einen oder mehrere weitere Versuchspunkte erfolgt, sofern die vorgegebene Modellgüte nicht erreicht ist, wobei vor der erneuten Validierung die Ausgangsparameter der Gießprozess-simulation für den Validierungs-Versuchspunt zum Trainieren des KI-Modells genutzt wird.

Im Schritt (E) erfolgt eine Durchführung eines Gießprozesses mittels der Gießvorrichtung 100, wobei mindestens ein Gießbauteil mittels der Gießvorrichtung 100 hergestellt wird, wobei die dem robusten, stationären Optimum zugeordneten Prozessparameter als Prozessparameter der Gießvorrichtung 100 verwendet werden und wobei eine Auswertung eines Ausgangsparameters oder mehrerer Ausgangsparameter für das Gießbauteil erfolgt.

Während der praktischen Versuche werden Sensordaten von Temperatursensoren der Gießvorrichtung 100 zur Messung von Temperaturen innerhalb der Gießform erfasst, um das Kl-Modell 340 weiter zu trainieren und zu validieren und erneut die Robustheit des betreffenden Versuchspunkt zu prüfen. Der Verfahrensschritt (F) beschreibt, dass die Sensordaten der Sensoren der Gießvorrichtung zur Validierung und/oder Verbesserung und/oder Neuerstellung des Metamodells oder der Metamodelle verwendet werden.

Auf diese Weise kann das KI-Modell 340 zu einem hybriden Modell erweitert werden, dass sowohl auf Simulationsdaten als auch auf realen Versuchen basiert.

Das KI-Modell 340 kann im Rahmen einer modellbasierten Regelung zur Regelung der Gießvorrichtung 100 eingesetzt werden, wobei Soll-Prozesspunkte anhand des KI-Modells 340 vorgegeben werden, deren Prozessparameter ein robustes Optimum darstellen.

Das KI-Modell 340 ermöglicht insbesondere ein zügiges Erreichen eines robusten Arbeitspunktes sowie eine autonome Prozessregelung.

## Patentansprüche

1. Verfahren zur Prozessauslegung für eine Gießvorrichtung, mit den Verfahrensschritten:
- Durchführung einer Versuchspunktberechnung,
- wobei einem jeweiligen Versuchspunkt Prozessparameter eines Gießprozesses für ein Gießbauteil zugeordnet sind,
- wobei eine Anzahl von Prozessparametern einen n-dimensionalen Versuchsraum definiert und
- wobei die Versuchspunkte sequenziell den Versuchsraum füllend innerhalb des Versuchsraums berechnet und an eine Gießprozesssimulation übergeben werden,
- Durchführung der Gießprozesssimulation,
- wobei sequenziell für die von der Versuchspunktberechnung übergebenen Versuchspunkte die Herstellung des Gießbauteils anhand der dem jeweiligen Versuchspunkt zugeordneten Prozessparameter simuliert wird,
- wobei für jeden Versuchspunkt in einer virtuellen Gießform das sequenzielle Herstellen von zwei oder mehr Gießbauteilen simuliert wird, bis die Temperatur der virtuellen Gießform einen stationären Zustand erreicht hat, wobei der stationäre Zustand innerhalb der Gießprozesssimulation als erreicht gilt, sofern eine Veränderung der Temperatur der virtuellen Gießform für aufeinanderfolgende Gießbauteile einen vorgegebenen Schwellwert unterschreitet,
- wobei für jedes Gießbauteil eines Versuchspunkts eine Auswertung eines Ausgangsparameters oder mehrerer Ausgangsparameter erfolgt, wobei ein Ausgangsparameter der Gießprozesssimulation ein Gussteildefekt des Gießbauteils ist, wie eine Porosität, ein Kaltlauf oder dergleichen, und/oder ein Ausgangsparameter der Gießprozesssimulation ein Maschinenparameter ist, wie eine Werkzeugtemperatur der virtuellen Gießform an einer vorgegebenen Position oder dergleichen;
- Durchführung einer Optimierung,
- wobei anhand der Prozessparameter und der zugeordneten Ausgangsparameter mindestens ein Metamodell der Gießprozesssimulation für zumindest einen Teil des n-dimensionalen Versuchsraums erstellt wird, das Metamodell ein KI-Modell ist, das auf Grundlage der Prozessparameter der Versuchspunkte und der Ausgangsparameter der Gießprozesssimulation trainiert und validiert wird,
- wobei für einen der Ausgangsparameter oder für mehrere der Ausgangsparameter ein robustes, stationäres Optimum mit seinen zugeordneten Prozessparametern ermittelt wird, wobei der Begriff des robusten, stationären Optimums bedeutet, dass für den betreffenden Versuchspunkt der stationäre Zustand einer Temperatur der Gießform erreicht ist, wobei zudem eine geringe Sensibilität gegenüber Parameterschwankungen in der Umgebung des Versuchspunkts vorliegt;
- Durchführung eines Gießprozesses,
- wobei mindestens ein Gießbauteil mittels einer Gießvorrichtung hergestellt wird, wobei die dem robusten, stationären Optimum zugeordneten Prozessparameter als Prozessparameter der Gießvorrichtung verwendet werden und
- wobei eine Auswertung eines Ausgangsparameters oder mehrerer Ausgangsparameter für das Gießbauteil erfolgt;
- wobei Sensordaten von Sensoren der Gießvorrichtung zur Validierung und/oder Verbesserung und/oder Neuerstellung des Metamodells verwendet werden;
- wobei ausgehend von dem robusten, stationären Optimum weitere Versuchspunkte mittels des Gießprozesses gefahren werden, und zwar Versuchspunkte in der Umgebung des robusten, stationären Optimums.

2. Verfahren nach Anspruch 1,
**dadurch gekennzeichnet, dass**
- der Versuchsraum durch mindestens eine vorbekannte Eingangsbeschränkung oder durch mehrere vorbekannte Eingangsbeschränkungen begrenzt ist,
- insbesondere eine oder mehrere physikalische vorbekannte Eingangsbeschränkungen und/oder eine oder mehrere maschinentechnische vorbekannte Eingangsbeschränkungen und/oder eine oder mehrere bauteilspezifische vorbekannte Eingangsbeschränkungen.

3. Verfahren nach einem der voranstehenden Ansprüche,
**dadurch gekennzeichnet, dass**
- der Versuchsraum durch eine Ausgangsbeschränkung oder durch mehrere Ausgangsbeschränkungen begrenzt ist,
- insbesondere eine oder mehrere physikalische Ausgangsbeschränkungen und/oder eine oder mehrere maschinentechnische Ausgangsbeschränkungen und/oder eine oder mehrere bauteilspezifische Ausgangsbeschränkungen und
- die Ausgangsbeschränkungen anhand der Ausgangsparameter der Gießprozesssimulation und/oder des Gießprozesses ermittelt werden.

4. Verfahren nach Anspruch 3,
**dadurch gekennzeichnet, dass**
- für mindestens eine Ausgangbeschränkung ein extrapolierbares Modell berechnet wird,
- wobei für jeden Versuchspunkt vor der Übergabe desselben an die Gießprozess-simulation eine Einhaltung der Ausgangbeschränkung anhand einer Extrapolation auf Grundlage des extrapolierbaren Modells überprüft wird,
- wobei für den Fall der Einhaltung der Ausgangbeschränkung der Versuchspunkt an die Gießprozesssimulation übergeben wird, und
- wobei für den Fall der Nichteinhaltung der Ausgangbeschränkung
- der Versuchspunkt verworfen und ein neuer Versuchspunkt anhand des Distanzkriteriums innerhalb des Versuchsraums berechnet und dieser neue Versuchspunkt wiederum auf die Einhaltung der Ausgangbeschränkung überprüft wird
oder
- der Versuchspunkt verworfen und ein neuer Versuchspunkt anhand des extrapolierbaren Modells auf einer Grenze der Ausgangbeschränkung bestimmt wird oder
- der Versuchspunkt mittels des extrapolierbaren Modells verschoben wird, wobei ein Sicherheitsabstand zu der Grenze der Ausgangbeschränkung eingehalten wird.

5. Verfahren nach Anspruch 4,
**dadurch gekennzeichnet, dass**
- das extrapolierbare Modell eine lineare Regression ist
oder
- das extrapolierbare Modell ein KI-Modell ist.

6. Verfahren nach einem der voranstehenden Ansprüche,
**dadurch gekennzeichnet, dass**
- dass als erster Versuchspunkt ein robuster Versuchspunkt eines ähnlichen Bauteils vorgegeben wird,
oder
- dass als erster Versuchspunkt ein zentraler Versuchspunkt innerhalb des Versuchsraums ausgewählt wird, dessen Prozessparameter einen vorgegebenen Mindestabstand zu Parametergrenzen der Prozessparameter aufweist, insbesondere einen vorgegebenen Mindestabstand zu vorbekannten Eingangsbeschränkungen aufweist.

7. Verfahren nach Anspruch 5 und 6,
**dadurch gekennzeichnet, dass**
ausgehend von dem ersten Versuchspunkt zunächst Versuchspunkte innerhalb des Versuchsraums definiert werden, die einen vorgegebenen Abstand zu dem ersten Versuchspunkt nicht überschreiten, bis das extrapolierbare Modell gebildet werden kann, welches basierend einem aktuell vorgegebenen Versuchspunkt und der nächsten Nachbarn versuchspunktspezifisch neu berechnet wird.

8. Verfahren nach einem der voranstehenden Ansprüche,
**dadurch gekennzeichnet, dass**
die Versuchspunkte sequenziell den Versuchsraum füllend anhand eines Distanzkriteriums innerhalb des Versuchsraums berechnet werden,
wobei das Distanzkriterium einen Abstand des nächsten zu berechnenden Versuchspunkts zu einem oder mehr der vorherigen Versuchspunkte innerhalb des Versuchsraums definiert.

9. Verfahren nach einem der voranstehenden Ansprüche,
**dadurch gekennzeichnet, dass**
für jeden Versuchspunkt einer oder mehrere Prozessparameter vorgegeben werden, ausgewählt aus: Schmelztemperatur, Druckkurve, Druckhaltezeit, Aushärtezeit, Form-Öffnungszeit, Kühlparameter, Ein/Aus-Zeiten.

10. Verfahren nach Anspruch 2 und nach Anspruch 9,
**dadurch gekennzeichnet, dass**
für einen oder mehr der Prozessparameter vorbekannte Eingangsbeschränkungen den Versuchsraum begrenzen.

11. Verfahren nach einem der voranstehenden Ansprüche,
**dadurch gekennzeichnet, dass**
- ein Metamodell für mindestens einen Gussteildefekt erstellt wird, wie eine Porosität, einen Kaltlauf oder dergleichen,
und/oder
- ein Metamodell für mindestens einen Maschinenparameter erstellt wird, wie eine Werkzeugtemperatur der virtuellen Gießform an einer vorgegebenen Position oder dergleichen.

12. Verfahren nach einem der voranstehenden Ansprüche,
**dadurch gekennzeichnet, dass**
- das Validieren des KI-Modells die folgenden Verfahrensschritte umfasst:
- Bestimmen einer Modellgüte des KI-Modells, indem für einen Validierungs-Versuchspunkt ein Ausgangsparameter der Gießprozesssimulation mit einer Vorhersage des KI-Modells für den Ausgangsparameter dieses Validierungs-Versuchspunkts verglichen wird,
- wobei eine Freigabe des KI-Modells erfolgt, sofern eine vorgegebene Modellgüte erreicht ist oder eine Wiederholung der Validierung für einen oder mehrere weitere Versuchspunkte erfolgt, sofern die vorgegebene Modellgüte nicht erreicht ist,
- wobei vor der erneuten Validierung die Ausgangsparameter der Gießprozesssimulation für den Validierungs-Versuchspunt zum Trainieren des KI-Modells genutzt werden.
und/oder
- mittels der Versuchspunktberechnung Versuchspunkte in der Umgebung eines möglichen robusten, stationären Optimums berechnet werden und
- diese Versuchspunkte in der Umgebung des möglichen robusten, stationären Optimums anhand des Metamodells ausgewertet werden, um das mögliche robuste, stationäre Optimums als das robuste, stationäre Optimum zu bestätigen;
und/oder
- das robuste Optimum vor dem Durchführen des Gießprozesses
- mittels der Gießprozesssimulation validiert wird und
- insbesondere Versuchspunkte in der Umgebung des robusten, stationären Optimums mittels der Gießprozesssimulation validiert werden;
und/oder
- die Optimierung eine robuste Mehrzieloptimierung ist.

13. Verfahren nach einem der voranstehenden Ansprüche,
**dadurch gekennzeichnet, dass**
- die Reihenfolge der Versuchspunkte ausgehend von dem robusten Optimum mit aufsteigendem Abstand im Versuchsraum sortiert werden und/oder vor dem Hintergrund einer Energie- und/oder Zeiteffizienz sortiert werden.

14. Verfahren nach einem der Ansprüche 4 oder 5,
**dadurch gekennzeichnet, dass**
Sensordaten von Sensoren der Gießvorrichtung zur Validierung und/oder Verbesserung und/oder Neuerstellung mindestens eines extrapolierbaren Modells verwendet werden.

15. Verfahren zur Prozessauslegung für eine Gießvorrichtung, mit den Verfahrensschritten:
- Durchführung einer Versuchspunktberechnung,
- wobei einem jeweiligen Versuchspunkt Prozessparameter eines Gießprozesses für ein Gießbauteil zugeordnet sind,
- wobei eine Anzahl von Prozessparametern einen n-dimensionalen Versuchsraum definiert und
- wobei die Versuchspunkte sequenziell den Versuchsraum füllend innerhalb des Versuchsraums berechnet und an einen Gießprozess übergeben werden,
- Durchführung des Gießprozesses,
- wobei sequenziell für die von der Versuchspunktberechnung übergebenen Versuchspunkte die Herstellung des Gießbauteils anhand der dem jeweiligen Versuchspunkt zugeordneten Prozessparameter durchgeführt wird,
- wobei für jeden Versuchspunkt in einer Gießform der Gießvorrichtung das sequenzielle Herstellen von zwei oder mehr Gießbauteilen durchgeführt wird, bis die Temperatur der Gießform einen stationären Zustand erreicht hat, wobei der stationäre Zustand der Temperatur der Gießform als erreicht gilt, sofern eine Veränderung der Temperatur der Gießform für aufeinanderfolgende Gießbauteile einen vorgegebenen Schwellwert unterschreitet,
- wobei für jedes Gießbauteil eines Versuchspunkts eine Auswertung eines Ausgangsparameters oder mehrerer Ausgangsparameter erfolgt, wobei ein Ausgangsparameter des Gießprozesses ein Gussteildefekt des Gießbauteils ist, wie eine Porosität, ein Kaltlauf oder dergleichen, und/oder ein Ausgangsparameter des Gießprozesses ein Maschinenparameter ist, wie eine Werkzeugtemperatur der Gießform an einer vorgegebenen Position oder dergleichen;
- Durchführung einer Optimierung,
- wobei anhand der Prozessparameter und der zugeordneten Ausgangsparameter mindestens ein Metamodell des Gießprozesses für zumindest einen Teil des n-dimensionalen Versuchsraums erstellt wird, wobei das Metamodell ein KI-Modell ist, das auf Grundlage der Prozessparameter der Versuchspunkte und der Ausgangsparameter des Gießprozesses trainiert und validiert wird,
- wobei für einen der Ausgangsparameter oder für mehrere der Ausgangsparameter ein robustes, stationäres Optimum mit seinen zugeordneten Prozessparametern ermittelt wird, wobei der Begriff des robusten, stationären Optimums bedeutet, dass für den betreffenden Versuchspunkt der stationäre Zustand einer Temperatur der Gießform erreicht ist, wobei zudem eine geringe Sensibilität gegenüber Parameterschwankungen in der Umgebung des Versuchspunkts vorliegt;
- Weitere Durchführung des Gießprozesses,
- wobei mindestens ein Gießbauteil mittels einer Gießvorrichtung hergestellt wird, wobei die dem robusten, stationären Optimum zugeordneten Prozessparameter als Prozessparameter der Gießvorrichtung verwendet werden und
- wobei eine Auswertung eines Ausgangsparameters oder mehrerer Ausgangsparameter für das Gießbauteil erfolgt
- wobei Sensordaten von Sensoren der Gießvorrichtung zur Validierung und/oder Verbesserung und/oder Neuerstellung des Metamodells verwendet werden;
- wobei ausgehend von dem robusten, stationären Optimum weitere Versuchspunkte mittels des Gießprozesses gefahren werden, und zwar Versuchspunkte in der Umgebung des robusten, stationären Optimums.

16. Verfahren zur Regelung einer Gießvorrichtung, mit den Verfahrensschritten:
- Bereitstellen eines Metamodells gemäß einem der voranstehenden Ansprüche;
- Regelung von Prozessparametern der Gießvorrichtung im Bereich des robusten, stationären Optimums.

## Claims

1. Method for process design for a casting device, comprising the method steps of:
- carrying out a test point calculation,
- wherein process parameters of a casting process for a cast component are assigned to a respective test point,
- wherein a number of process parameters define an n-dimensional test space and
- wherein the test points are calculated sequentially within the test space so as to fill the test space and are transferred to a casting process simulation,
- carrying out the casting process simulation,
- wherein, sequentially for the test points transferred from the test point calculation, the production of the cast component is simulated on the basis of the process parameters assigned to the respective test point,
- wherein, for each test point, the sequential production of two or more cast components in a virtual mold is simulated until the temperature of the virtual mold has reached a steady state, wherein the steady state is deemed to have been reached within the casting process simulation if a change in the temperature of the virtual mold for successive cast components falls below a predetermined threshold value,
- wherein, for each cast component of a test point, an evaluation of one output parameter or of a plurality of output parameters is carried out, wherein an output parameter of the casting process simulation is a casting defect of the cast component, such as a porosity, a cold shut or the like, and/or an output parameter of the casting process simulation is a machine parameter, such as a tool temperature of the virtual mold at a predetermined position or the like;
- carrying out an optimization,
- wherein, on the basis of the process parameters and the assigned output parameters, at least one metamodel of the casting process simulation is created for at least part of the n-dimensional test space, wherein the metamodel is an AI model which is trained and validated on the basis of the process parameters of the test points and the output parameters of the casting process simulation,
- wherein, for one of the output parameters or for a plurality of the output parameters, a robust, steady-state optimum with its assigned process parameters is determined, wherein the term robust, steady-state optimum means that, for the test point concerned, the steady state of a temperature of the mold has been reached, wherein, in addition, there is a low sensitivity to parameter fluctuations in the vicinity of the test point;
- carrying out a casting process,
- wherein at least one cast component is produced by means of a casting device, wherein the process parameters assigned to the robust, steady-state optimum are used as process parameters of the casting device, and
- wherein an evaluation of one output parameter or of a plurality of output parameters is carried out for the cast component;
- wherein sensor data from sensors of the casting device are used for validating and/or improving and/or re-creating the metamodel;
- wherein, starting from the robust, steady-state optimum, further test points are run by means of the casting process, namely test points in the vicinity of the robust, steady-state optimum.

2. Method according to claim 1, **characterized in that**
- the test space is limited by at least one previously known input constraint or by a plurality of previously known input constraints,
- in particular one or more physical previously known input constraints and/or one or more machine-related previously known input constraints and/or one or more component-specific previously known input constraints.

3. Method according to one of the preceding claims, **characterized in that**
- the test space is limited by one output constraint or by a plurality of output constraints,
- in particular one or more physical output constraints and/or one or more machine-related output constraints and/or one or more component-specific output constraints, and
- the output constraints are determined on the basis of the output parameters of the casting process simulation and/or of the casting process.

4. Method according to claim 3, **characterized in that**
- an extrapolatable model is calculated for at least one output constraint,
- wherein, for each test point, prior to the transfer thereof to the casting process simulation, compliance with the output constraint is checked on the basis of an extrapolation based on the extrapolatable model,
- wherein, in the event of compliance with the output constraint, the test point is transferred to the casting process simulation, and
- wherein, in the event of non-compliance with the output constraint,
- the test point is discarded and a new test point is calculated within the test space on the basis of the distance criterion, and this new test point is in turn checked for compliance with the output constraint,
or
- the test point is discarded and a new test point is determined on a limit of the output constraint on the basis of the extrapolatable model,
or
- the test point is shifted by means of the extrapolatable model, wherein a safety distance from the limit of the output constraint is maintained.

5. Method according to claim 4, **characterized in that**
- the extrapolatable model is a linear regression
or
- the extrapolatable model is an AI model.

6. Method according to one of the preceding claims, **characterized in that**
- a robust test point of a similar component is predetermined as the first test point,
or
- a central test point within the test space is selected as the first test point, the process parameters of which have a predetermined minimum distance from parameter limits of the process parameters, in particular a predetermined minimum distance from previously known input constraints.

7. Method according to claims 5 and 6, **characterized in that**
starting from the first test point, test points which do not exceed a predetermined distance from the first test point are first defined within the test space until the extrapolatable model can be formed, which is recalculated in a test-point-specific manner on the basis of a currently predetermined test point and the nearest neighbors.

8. Method according to one of the preceding claims, **characterized in that**
the test points are calculated sequentially within the test space so as to fill the test space, on the basis of a distance criterion,
wherein the distance criterion defines a distance of the next test point to be calculated from one or more of the previous test points within the test space.

9. Method according to one of the preceding claims, **characterized in that**
for each test point, one or more process parameters are predetermined, selected from: melt temperature, pressure curve, pressure holding time, curing time, mold opening time, cooling parameters, on/off times.

10. Method according to claim 2 and according to claim 9, **characterized in that** for one or more of the process parameters, previously known input constraints limit the test space.

11. Method according to one of the preceding claims, **characterized in that**
- a metamodel is created for at least one casting defect, such as a porosity, a cold shut or the like,
and/or
- a metamodel is created for at least one machine parameter, such as a tool temperature of the virtual mold at a predetermined position or the like.

12. Method according to one of the preceding claims, **characterized in that**
- the validating of the AI model comprises the following method steps:
- determining a model quality of the AI model by comparing, for a validation test point, an output parameter of the casting process simulation with a prediction of the AI model for the output parameter of this validation test point,
- wherein the AI model is released if a predetermined model quality is reached, or the validation is repeated for one or more further test points if the predetermined model quality is not reached,
- wherein, prior to the renewed validation, the output parameters of the casting process simulation for the validation test point are used for training the AI model,
and/or
- test points in the vicinity of a possible robust, steady-state optimum are calculated by means of the test point calculation and
- these test points in the vicinity of the possible robust, steady-state optimum are evaluated on the basis of the metamodel in order to confirm the possible robust, steady-state optimum as the robust, steady-state optimum;
and/or
- the robust optimum, prior to carrying out the casting process,
- is validated by means of the casting process simulation and
- in particular, test points in the vicinity of the robust, steady-state optimum are validated by means of the casting process simulation;
and/or
- the optimization is a robust multi-objective optimization.

13. Method according to one of the preceding claims, **characterized in that**
- the order of the test points is sorted, starting from the robust optimum, by increasing distance in the test space and/or is sorted with a view to energy and/or time efficiency.

14. Method according to one of claims 4 or 5, **characterized in that** sensor data from sensors of the casting device are used for validating and/or improving and/or re-creating at least one extrapolatable model.

15. Method for process design for a casting device, comprising the method steps of:
- carrying out a test point calculation,
- wherein process parameters of a casting process for a cast component are assigned to a respective test point,
- wherein a number of process parameters define an n-dimensional test space and
- wherein the test points are calculated sequentially within the test space so as to fill the test space and are transferred to a casting process,
- carrying out the casting process,
- wherein, sequentially for the test points transferred from the test point calculation, the production of the cast component is carried out on the basis of the process parameters assigned to the respective test point,
- wherein, for each test point, the sequential production of two or more cast components in a mold of the casting device is carried out until the temperature of the mold has reached a steady state, wherein the steady state of the temperature of the mold is deemed to have been reached if a change in the temperature of the mold for successive cast components falls below a predetermined threshold value,
- wherein, for each cast component of a test point, an evaluation of one output parameter or of a plurality of output parameters is carried out, wherein an output parameter of the casting process is a casting defect of the cast component, such as a porosity, a cold shut or the like, and/or an output parameter of the casting process is a machine parameter, such as a tool temperature of the mold at a predetermined position or the like;
- carrying out an optimization,
- wherein, on the basis of the process parameters and the assigned output parameters, at least one metamodel of the casting process is created for at least part of the n-dimensional test space, wherein the metamodel is an AI model which is trained and validated on the basis of the process parameters of the test points and the output parameters of the casting process,
- wherein, for one of the output parameters or for a plurality of the output parameters, a robust, steady-state optimum with its assigned process parameters is determined, wherein the term robust, steady-state optimum means that, for the test point concerned, the steady state of a temperature of the mold has been reached, wherein, in addition, there is a low sensitivity to parameter fluctuations in the vicinity of the test point;
- further carrying out the casting process,
- wherein at least one cast component is produced by means of a casting device, wherein the process parameters assigned to the robust, steady-state optimum are used as process parameters of the casting device, and
- wherein an evaluation of one output parameter or of a plurality of output parameters is carried out for the cast component,
- wherein sensor data from sensors of the casting device are used for validating and/or improving and/or re-creating the metamodel;
- wherein, starting from the robust, steady-state optimum, further test points are run by means of the casting process, namely test points in the vicinity of the robust, steady-state optimum.

16. Method for control of a casting device, comprising the method steps of:
- providing a metamodel according to one of the preceding claims;
- control of process parameters of the casting device in the region of the robust, steady-state optimum.

## Revendications

1. Procédé de conception de processus pour un dispositif de coulée, comprenant les étapes de procédé suivantes :
- réalisation d'un calcul de points d'essai,
- dans lequel des paramètres de processus d'un processus de coulée pour une pièce moulée sont associés à un point d'essai respectif,
- dans lequel un certain nombre de paramètres de processus définissent un espace d'essai à n dimensions et
- dans lequel les points d'essai sont calculés séquentiellement à l'intérieur de l'espace d'essai de manière à le remplir et transmis à une simulation du processus de coulée,
- réalisation de la simulation du processus de coulée,
- la fabrication de la pièce moulée étant simulée de manière séquentielle pour les points d'essai transmis par le calcul des points d'essai, à l'aide des paramètres de processus associés au point d'essai respectif,
- la fabrication séquentielle de deux pièces moulées ou plus étant simulée pour chaque point d'essai dans un moule virtuel, jusqu'à ce que la température du moule virtuel ait atteint un état stationnaire, l'état stationnaire étant réputé atteint dans le cadre de la simulation du processus de coulée dès lors qu'une variation de la température du moule virtuel pour des pièces moulées successives est inférieure à une valeur seuil prédéfinie,
- une évaluation d'un paramètre de sortie ou de plusieurs paramètres de sortie étant eCectuée pour chaque pièce moulée d'un point d'essai, un paramètre de sortie de la simulation du processus de coulée étant un défaut de fonderie de la pièce moulée, tel qu'une porosité, une reprise ou similaire, et/ou un paramètre de sortie de la simulation du processus de coulée étant un paramètre de machine, tel qu'une température d'outillage du moule virtuel en une position prédéfinie ou similaire ;
- réalisation d'une optimisation,
- dans laquelle, à partir des paramètres de processus et des paramètres de sortie associés, au moins un métamodèle de la simulation du processus de coulée est créé pour au moins une partie de l'espace d'essai à n dimensions, le métamodèle étant un modèle d'IA qui est entraîné et validé sur la base des paramètres de processus des points d'essai et des paramètres de sortie de la simulation du processus de coulée,
- un optimum robuste et stationnaire, avec ses paramètres de processus associés, étant déterminé pour l'un des paramètres de sortie ou pour plusieurs des paramètres de sortie, la notion d'optimum robuste et stationnaire signifiant que, pour le point d'essai concerné, l'état stationnaire d'une température du moule est atteint, et qu'il existe en outre une faible sensibilité aux fluctuations de paramètres au voisinage du point d'essai ;
- réalisation d'un processus de coulée,
- dans lequel au moins une pièce moulée est fabriquée au moyen d'un dispositif de coulée, les paramètres de processus associés à l'optimum robuste et stationnaire étant utilisés comme paramètres de processus du dispositif de coulée, et
- dans lequel une évaluation d'un paramètre de sortie ou de plusieurs paramètres de sortie est eCectuée pour la pièce moulée ;
- des données de capteurs provenant de capteurs du dispositif de coulée étant utilisées pour la validation et/ou l'amélioration et/ou la recréation du métamodèle ;
- à partir de l'optimum robuste et stationnaire, d'autres points d'essai étant réalisés au moyen du processus de coulée, à savoir des points d'essai situés au voisinage de l'optimum robuste et stationnaire.

2. Procédé selon la revendication 1,
**caractérisé en ce que**
- l'espace d'essai est délimité par au moins une contrainte d'entrée connue au préalable ou par plusieurs contraintes d'entrée connues au préalable,
- en particulier une ou plusieurs contraintes d'entrée physiques connues au préalable et/ou une ou plusieurs contraintes d'entrée liées à la machine connues au préalable et/ou une ou plusieurs contraintes d'entrée spécifiques au composant connues au préalable.

3. Procédé selon l'une des revendications précédentes,
**caractérisé en ce que**
- l'espace d'essai est délimité par une contrainte de sortie ou par plusieurs contraintes de sortie,
- en particulier une ou plusieurs contraintes de sortie physiques et/ou une ou plusieurs contraintes de sortie liées à la machine et/ou une ou plusieurs contraintes de sortie spécifiques au composant, et
- les contraintes de sortie sont déterminées à partir des paramètres de sortie de la simulation du processus de coulée et/ou du processus de coulée.

4. Procédé selon la revendication 3,
**caractérisé en ce que**
- un modèle extrapolable est calculé pour au moins une contrainte de sortie,
- dans lequel, pour chaque point d'essai, avant sa transmission à la simulation du processus de coulée, le respect de la contrainte de sortie est vérifié à l'aide d'une extrapolation sur la base du modèle extrapolable,
- dans lequel, en cas de respect de la contrainte de sortie, le point d'essai est transmis à la simulation du processus de coulée, et
- dans lequel, en cas de non-respect de la contrainte de sortie
- le point d'essai est rejeté et un nouveau point d'essai est calculé à l'aide du critère de distance à l'intérieur de l'espace d'essai, et ce nouveau point d'essai est à son tour vérifié quant au respect de la contrainte de sortie
ou
- le point d'essai est rejeté et un nouveau point d'essai est déterminé à l'aide du modèle extrapolable sur une limite de la contrainte de sortie
ou
- le point d'essai est déplacé au moyen du modèle extrapolable, dans lequel une distance de sécurité par rapport à la limite de la contrainte de sortie est respectée.

5. Procédé selon la revendication 4,
**caractérisé en ce que**
- le modèle extrapolable est une régression linéaire
ou
- le modèle extrapolable est un modèle d'IA.

6. Procédé selon l'une des revendications précédentes,
**caractérisé en ce que**
- un point d'essai robuste d'un composant similaire est prédéfini comme premier point d'essai, ou
- un point d'essai central situé à l'intérieur de l'espace d'essai est sélectionné comme premier point d'essai, dont les paramètres de processus présentent une distance minimale prédéfinie par rapport aux limites de paramètres des paramètres de processus, en particulier une distance minimale prédéfinie par rapport à des contraintes d'entrée connues au préalable.

7. Procédé selon les revendications 5 et 6,
**caractérisé en ce que**
à partir du premier point d'essai, des points d'essai qui ne dépassent pas une distance prédéfinie par rapport au premier point d'essai sont d'abord définis à l'intérieur de l'espace d'essai, jusqu'à ce que le modèle extrapolable puisse être formé, lequel est recalculé de manière spécifique au point d'essai sur la base d'un point d'essai actuellement prédéfini et des voisins les plus proches.

8. Procédé selon l'une des revendications précédentes,
**caractérisé en ce que**
les points d'essai sont calculés séquentiellement à l'intérieur de l'espace d'essai de manière à le remplir, à l'aide d'un critère de distance,
le critère de distance définissant une distance entre le point d'essai suivant à calculer et un ou plusieurs des points d'essai précédents à l'intérieur de l'espace d'essai.

9. Procédé selon l'une des revendications précédentes,
**caractérisé en ce que**
pour chaque point d'essai, un ou plusieurs paramètres de processus sont prédéfinis, choisis parmi : la température de la masse fondue, la courbe de pression, le temps de maintien de la pression, le temps de durcissement, le temps d'ouverture du moule, les paramètres de refroidissement, les temps de marche/arrêt.

10. Procédé selon la revendication 2 et selon la revendication 9,
**caractérisé en ce que**
pour un ou plusieurs des paramètres de processus, des contraintes d'entrée connues au préalable délimitent l'espace d'essai.

11. Procédé selon l'une des revendications précédentes,
**caractérisé en ce que**
- un métamodèle est créé pour au moins un défaut de fonderie, tel qu'une porosité, une reprise ou similaire,
et/ou
- un métamodèle est créé pour au moins un paramètre de machine, tel qu'une température d'outillage du moule virtuel en une position prédéfinie ou similaire.

12. Procédé selon l'une des revendications précédentes,
**caractérisé en ce que**
- la validation du modèle d'IA comprend les étapes de procédé suivantes :
- la détermination d'une qualité de modèle du modèle d'IA, en comparant, pour un point d'essai de validation, un paramètre de sortie de la simulation du processus de coulée avec une prédiction du modèle d'IA pour le paramètre de sortie de ce point d'essai de validation,
- le modèle d'IA étant approuvé si une qualité de modèle prédéfinie est atteinte, ou la validation étant répétée pour un ou plusieurs points d'essai supplémentaires si la qualité de modèle prédéfinie n'est pas atteinte,
- les paramètres de sortie de la simulation du processus de coulée pour le point d'essai de validation étant utilisés, avant la nouvelle validation, pour l'entraînement du modèle d'IA, et/ou
- des points d'essai sont calculés au moyen du calcul des points d'essai au voisinage d'un optimum robuste et stationnaire possible, et
- ces points d'essai situés au voisinage de l'optimum robuste et stationnaire possible sont évalués à l'aide du métamodèle afin de confirmer l'optimum robuste et stationnaire possible comme étant l'optimum robuste et stationnaire ;
et/ou
- l'optimum robuste, avant la réalisation du processus de coulée,
- est validé au moyen de la simulation du processus de coulée et
- en particulier, des points d'essai situés au voisinage de l'optimum robuste et stationnaire sont validés au moyen de la simulation du processus de coulée ;
et/ou
- l'optimisation est une optimisation multi-objectifs robuste.

13. Procédé selon l'une des revendications précédentes,
**caractérisé en ce que**
- l'ordre des points d'essai est trié, à partir de l'optimum robuste, par distance croissante dans l'espace d'essai et/ou est trié en fonction d'une eCicacité énergétique et/ou temporelle.

14. Procédé selon l'une des revendications 4 ou 5,
**caractérisé en ce que**
des données de capteurs provenant de capteurs du dispositif de coulée sont utilisées pour la validation et/ou l'amélioration et/ou la recréation d'au moins un modèle extrapolable.

15. Procédé de conception de processus pour un dispositif de coulée, comprenant les étapes de procédé suivantes :
- réalisation d'un calcul de points d'essai,
- dans lequel des paramètres de processus d'un processus de coulée pour une pièce moulée sont associés à un point d'essai respectif,
- dans lequel un certain nombre de paramètres de processus définissent un espace d'essai à n dimensions et
- dans lequel les points d'essai sont calculés séquentiellement à l'intérieur de l'espace d'essai de manière à le remplir et transmis à un processus de coulée,
- réalisation du processus de coulée,
- la fabrication de la pièce moulée étant eCectuée de manière séquentielle pour les points d'essai transmis par le calcul des points d'essai, à l'aide des paramètres de processus associés au point d'essai respectif,
- la fabrication séquentielle de deux pièces moulées ou plus étant eCectuée pour chaque point d'essai dans un moule du dispositif de coulée, jusqu'à ce que la température du moule ait atteint un état stationnaire, l'état stationnaire de la température du moule étant réputé atteint dès lors qu'une variation de la température du moule pour des pièces moulées successives est inférieure à une valeur seuil prédéfinie,
- une évaluation d'un paramètre de sortie ou de plusieurs paramètres de sortie étant eCectuée pour chaque pièce moulée d'un point d'essai, un paramètre de sortie du processus de coulée étant un défaut de fonderie de la pièce moulée, tel qu'une porosité, une reprise ou similaire, et/ou un paramètre de sortie du processus de coulée étant un paramètre de machine, tel qu'une température d'outillage du moule en une position prédéfinie ou similaire ;
- réalisation d'une optimisation,
- dans laquelle, à partir des paramètres de processus et des paramètres de sortie associés, au moins un métamodèle du processus de coulée est créé pour au moins une partie de l'espace d'essai à n dimensions, le métamodèle étant un modèle d'IA qui est entraîné et validé sur la base des paramètres de processus des points d'essai et des paramètres de sortie du processus de coulée,
- un optimum robuste et stationnaire, avec ses paramètres de processus associés, étant déterminé pour l'un des paramètres de sortie ou pour plusieurs des paramètres de sortie, la notion d'optimum robuste et stationnaire signifiant que, pour le point d'essai concerné, l'état stationnaire d'une température du moule est atteint, et qu'il existe en outre une faible sensibilité aux fluctuations de paramètres au voisinage du point d'essai ;
- poursuite de la réalisation du processus de coulée,
- dans laquelle au moins une pièce moulée est fabriquée au moyen d'un dispositif de coulée, les paramètres de processus associés à l'optimum robuste et stationnaire étant utilisés comme paramètres de processus du dispositif de coulée, et
- dans laquelle une évaluation d'un paramètre de sortie ou de plusieurs paramètres de sortie est eCectuée pour la pièce moulée,
- des données de capteurs provenant de capteurs du dispositif de coulée étant utilisées pour la validation et/ou l'amélioration et/ou la recréation du métamodèle ;
- à partir de l'optimum robuste et stationnaire, d'autres points d'essai étant réalisés au moyen du processus de coulée, à savoir des points d'essai situés au voisinage de l'optimum robuste et stationnaire.

16. Procédé de régulation d'un dispositif de coulée, comprenant les étapes de procédé suivantes :
- mise à disposition d'un métamodèle selon l'une des revendications précédentes ;
- régulation de paramètres de processus du dispositif de coulée dans la plage de l'optimum robuste et stationnaire.
